(19)

Europäisches
Patentamt

European
Patent Office

Office européen
des brevets

(11) **EP 2 530 821 B1**

(12) **EUROPEAN PATENT SPECIFICATION**

(45) Date of publication and mention
of the grant of the patent:
**25.10.2017 Bulletin 2017/43**

(51) Int Cl.:
*H02M 7/219* *(2006.01)*     *B60C 23/04* *(2006.01)*

(21) Application number: **12170119.7**

(22) Date of filing: **30.05.2012**

(54) **Rectifier circuit, method for operating the rectifier circuit, and energy harvesting system comprising the rectifier circuit**

Gleichrichterschaltung, Verfahren zum Betrieb der Gleichrichterschaltung und
Energiegewinnungssystem mit der Gleichrichterschaltung

Circuit redresseur, procédé de fonctionnement du circuit redresseur et système de collecte d'énergie
comprenant le circuit redresseur

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.05.2011 IT TO20110470**

(43) Date of publication of application:
**05.12.2012 Bulletin 2012/49**

(73) Proprietor: **STMicroelectronics S.r.l.
Agrate Brianza (IT)**

(72) Inventors:
• **Ramorini, Stefano
20010 Arluno (IT)**
• **Gasparini, Alessandro
20092 Cinisello Balsamo (IT)**
• **Membretti, Massimiliano Giorgio
20129 Milano (IT)**

(74) Representative: **Cerbaro, Elena et al
Studio Torta S.p.A.
Via Viotti, 9
10121 Torino (IT)**

(56) References cited:
**US-A1- 2005 110 277**

• **AYAZ HASAN ET AL: "Monolithic DC-DC boost
converter with current-mode hysteretic control",
ELECTRICAL AND COMPUTER ENGINEERING
(CCECE), 2011 24TH CANADIAN CONFERENCE
ON, IEEE, 8 May 2011 (2011-05-08), pages
1242-1245, XP031967721, DOI:
10.1109/CCECE.2011.6030661 ISBN:
978-1-4244-9788-1**
• **SALMON J C ED - INSTITUTE OF ELECTRICAL
AND ELECTRONICS ENGINEERS: "Circuit
topologies for single-phase voltage-doubler
boost rectifiers", PROCEEDINGS OF THE
ANNUAL APPLIED POWER ELECTRONICS
CONFERENCE AND EXHIBITION. (APEC).
BOSTON, FEB. 23 - 27, 1992; [PROCEEDINGS OF
THE ANNUAL APPLIED POWER ELECTRONICS
CONFERENCE AND EXHIBITION. (APEC)], NEW
YORK, IEEE, US, vol. CONF. 7, 23 February 1992
(1992-02-23), pages 549-556, XP010056897, DOI:
10.1109/APEC.1992.228362 ISBN:
978-0-7803-0485-7**
• **SHENCK N S ET AL: "Energy scavenging with
shoe-mounted piezoelectrics", IEEE MICRO,
IEEE SERVICE CENTER, LOS ALAMITOS, CA, US,
vol. 21, no. 3, 1 May 2001 (2001-05-01), pages
30-42, XP002454983, ISSN: 0272-1732, DOI:
10.1109/40.928763**

EP 2 530 821 B1

**Description**

The present invention relates to a rectifier circuit, to a method for operating the rectifier circuit, and to an environmental-energy harvesting system comprising the rectifier circuit. The present invention moreover relates to an apparatus (for example, a vehicle) comprising the environmental-energy harvesting system.

As is known, systems for harvesting energy (also known as "energy harvesting systems" or "energy-scavenging systems") from intermittent environmental energy sources (i.e., sources that supply energy in an irregular way) have aroused and continue to arouse considerable interest in a wide range of technological fields. Typically, energy harvesting systems are adapted to harvest, store, and transfer energy generated by mechanical sources to a generic load of an electrical type.

Low-frequency vibrations, such as for example mechanical vibrations of disturbance in systems with moving parts can be a valid source of energy. Mechanical energy is converted, by one or more appropriate transducers (for example, piezoelectric or electromagnetic devices) into electrical energy, which can be used for supplying an electrical load. In this way, the electrical load does not require batteries or other supply systems that are cumbersome and poorly resistant to mechanical stresses.

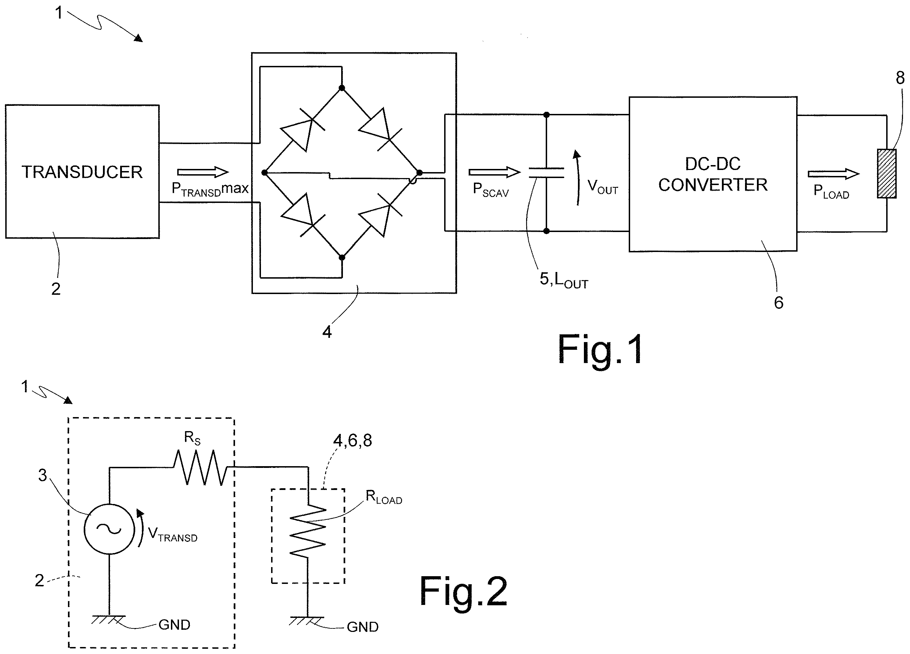

Figure 1 is a schematic illustration, by means of functional blocks, of an energy harvesting system of a known type.

The energy harvesting system 1 of Figure 1 comprises: a transducer 2, for example of an electromagnetic type, which is adapted to convert the mechanical energy of environmental mechanical vibrations into electrical energy, typically into AC voltages; a scavenging interface 4, for example comprising a diode-bridge rectifier circuit (also known as Graetz bridge), configured for receiving at input the AC signal generated by the transducer 2 and supplying at output a DC signal for charging a capacitor 5 connected to the output of the rectifier circuit 4; and a DC-DC converter 6, connected to the capacitor 5 for receiving at input the electrical energy stored by the capacitor 5 and supplying it to an electrical load 8. The capacitor 5 hence has the function of energy-storage element, energy which is made available, when required, to the electrical load 8 for operation of the latter.

The global efficiency $\eta_{TOT}$ of the energy harvesting system 1 is given by Eq. (1) below

$$\eta_{TOT} = \eta_{TRANSD} \cdot \eta_{SCAV} \cdot \eta_{DCDC} \qquad (1)$$

where: $\eta_{TRANSD}$ is the efficiency of the transducer 2, indicating the amount of power available in the environment that has been effectively converted, by the transducer 2, into electrical power; $\eta_{SCAV}$ is the efficiency of the scavenging interface 4, indicating the power dissipated by the scavenging interface 4 and the factor of impedance coupling $\eta_{COUPLE}$ between the transducer 2 and the scavenging interface; and $\eta_{DCDC}$ is the efficiency of the DC-DC converter 6.

As is known, in order to supply to the load the maximum power available, the impedance of the load should be equal to that of the source. As illustrated in Figure 2, the transducer 2 can be represented schematically, in this context, as a voltage generator 3 provided with a resistance $R_S$ of its own. The maximum power $P_{TMNSD}{}^{MAX}$ that the transducer 2 can supply at output may be defined as:

$$P_{TRANSD}{}^{MAX} = V_{TRANSD}{}^2/4R_S \ \ if \ \ R_{LOAD} = R_S \qquad (2)$$

where: $V_{TRANSD}$ is the voltage produced by the equivalent voltage generator; and $R_{LOAD}$ is the equivalent electrical resistance at the output of the transducer 2 (or, likewise, seen at input to the scavenging interface 4), which takes into due consideration the equivalent resistance of the scavenging interface 4, of the DC-DC converter 6, and of the load 8.

Due to the impedance mismatch ($R_{LOAD} \# R_S$), the power at input to the scavenging interface 4 is lower than the maximum power available $P_{TRANSD}{}^{MAX}$.

The power $P_{SCAV}$ transferred to the capacitor 5 is a fraction of the power recovered by the interface, and is given by Eq. (3) below

$$P_{SCAV} = \eta_{TRANSD} \cdot \eta_{SCAV} \cdot P_{TRANSD}{}^{MAX} \qquad (3)$$

The power required of the DC-DC converter 6 for supplying the electrical load 8 is given by the following Eq. (4)

$$P_{LOAD} = P_{DCDC} \cdot \eta_{DCDC} \qquad (4)$$

where $P_{DCDC}$ is the power received at input by the DC-DC converter 8, in this case coinciding with $P_{SCAV}$, and $P_{LOAD}$ is the power required by the electrical load.

The efficiency of the system 1 of Figure 1 markedly depends upon the signal generated by the transducer 2.

The efficiency drops rapidly to the zero value (i.e., the system 1 is unable to harvest environmental energy) if the amplitude of the signal of the transducer (signal $V_{TRANSD}$) assumes a value lower, in absolute value, than $V_{OUT+}2V_{TH\_D}$, where $V_{OUT}$ is the voltage accumulated on the capacitor 5 and $V_{TH\_D}$ is the threshold voltage of the diodes that form the scavenging interface 4. As a consequence of this, the maximum energy that can be stored in the capacitor 5 is limited to the value $E_{max} = 0.5 \cdot C_{OUT} \cdot (V_{TMNSD}^{MAX} - 2V_{TH\_d})^2$. If the amplitude of the signal $V_{TRANSD}$ of the transducer 2 is lower than twice the threshold voltage $V_{TH\_D}$ of the diodes of the rectifier of the scavenging interface 4 (i.e., $V_{TRANSD} < 2V_{TH\_D}$), energy is not harvested from the environment and the load is not supplied.

Document US 2005/0110277 and publication by Shenck N. S. et al. "Energy scavenging with shoe-mounted piezoelectrics", IEEE MICRO, IEEE Service Center, Los Alamitos, CA, US, Vol.21, no. 3, 1 May 2001, pages 30-42, provides for a respective system of Energy harvesting based on a piezoelectric transducer. Both documents use as scavenging interface a diode bridge, operating as a peak detector. The diode bridge has some disadvantages which compromise the efficiency. In particular, such diodes do not transfer power to the output (thus they have a "zero" efficiency) if the transducer voltage is lower than the voltage stored in the output capacitor; moreover, since the systems use purely passive components (diodes), they cannot be controlled in an active way so as to maximize the impedance matching with the transducer, which is of foundamental importance for maximizing the efficiency of the energy harvesting interface.

The document by Ayaz Hasan et al., "Monolithic DC-DC Boost Converter with Current-Mode Hysteretic Control", ELECTRICAL AND COMPUTER ENGINEERING (CCECE), 2011, 24th Canadian Conference, IEEE, 8 May 2011, pages 1242-1245, discloses a boost converter in closed loop hysteretically controller between two thresholds VREF-VLIM; a system of this kind (direct AC-DC converter) is useless for energy harvesting applications for the following reasons: (i) if the transducer provides more power than that require by the load, the system is not able to store the extra energy in the output capacitor (low efficiency); (ii) if the load requires more power than the power the transducer can supply, the output voltage drops instantaneously.

The document by John C. Salmon, "Circuit Topologies For Single-Phase Voltage-Doubler Boost Rectifier", Proceedings of the annual applied power electronics conference and exhibition (APEC), Boston, Feb. 23-27 1992; [Proceedings of the annual applied power electronics conference and exhibition (APEC)], New York, IEEE, US, vol. Conf. 7, 23 Feb. 1992, pages 549-556, provides for circuit architectures adapted to generate, as an output, a voltage which is double than the input voltage, without operating an AC-DC conversion of the input voltage. Such circuit architectures, thus, are not designed to store electric Energy on the basis o fan input signal of AC type. The aim of the present invention is to provide a rectifier circuit, a method for operating the rectifier circuit, an environmental-energy harvesting system comprising the rectifier circuit, and an apparatus comprising the environmental-energy harvesting system that will enable the aforesaid problems and disadvantages to be overcome, and in particular that will present a high efficiency.

According to the present invention a rectifier circuit, a method for operating the rectifier circuit, an environmental-energy harvesting system comprising the rectifier circuit, and an apparatus comprising the environmental-energy harvesting system, are consequently provided as defined in the annexed claims.

For a better understanding of the present invention, preferred embodiments thereof are now described, purely by way of nonlimiting example and with reference to the attached drawings, wherein:

- Figure 1 shows an energy harvesting system according to a known embodiment;
- Figure 2 shows an energy harvesting system according to a further known embodiment;
- Figure 3 shows an energy harvesting system comprising an energy-scavenging interface that can be operated according to the steps of the method of Figure 8, according to one embodiment of the present invention;
- Figures 4a and 4b show the energy harvesting system of Figure 3 in respective successive operating conditions;
- Figures 5a-5c show the time plots of current signals of the energy harvesting system of Figure 3 in the operating conditions of Figures 4a and 4b;
- Figures 6a and 6b show values of optimal duration in which the system of Figure 3 remains in the operating state of Figure 4 as a function, respectively, of the output voltage and the voltage of the transducer;
- Figure 7 shows the energy harvesting system of Figure 3, further comprising control means for operating the energy harvesting system according to the steps of the method of Figure 8, according to one embodiment of the present invention;
- Figure 8 shows, by means of a flowchart, steps of a method for control of the energy harvesting system of Figure 3, according to one embodiment of the present invention;
- Figure 9 shows the energy harvesting system of Figure 7 comprising control means for operating the energy harvesting system according to the steps of the method of Figure 10, according to a further embodiment of the present invention;

- Figure 10 shows, by means of a flowchart, steps of a method for control of the energy harvesting system of Figure 9, according to a further embodiment of the present invention; and
- Figure 11 shows a vehicle comprising the energy harvesting system of Figure 7 or Figure 9.

The energy-scavenging interface (which, in particular, has the configuration of a rectifier circuit) according to the present invention can be connected between an input signal source (in particular, an AC voltage signal) and an electrical load to be supplied (possibly by means of interposition of a DC-DC converter for supplying the load with an adequate voltage level). The energy-scavenging interface comprises, according to one embodiment of the present invention, a first switch and a second switch, each having a control terminal, connected between the input and the output terminals of the energy-scavenging interface. In particular, the first switch is connected between the first input terminal of the energy-scavenging interface and an output terminal at reference voltage, whilst the second switch is connected between the second input terminal of the energy-scavenging interface and the output terminal at reference voltage.

The energy-scavenging interface further comprises a control logic, coupled to the control terminals of the first and second switches, configured for opening/closing the first and second switches by means of an appropriate control signal.

In one embodiment, the energy-scavenging interface further comprises a first diode and a second diode, one of which is connected between the first input terminal and a further output terminal of the energy-scavenging interface, and the other is connected between the second input terminal and the further output terminal of the energy-scavenging interface.

According to a different embodiment, the first and second diodes are replaced by a respective third switch and fourth switch, each having a control terminal. In this case, the control logic is moreover configured for operating third and fourth switches for generating, at output from the energy-scavenging interface, a substantially DC signal.

The first, second, third, and fourth switches are, for example, n-channel MOSFETs having an internal diode (parasitic diode). In this case, the third and fourth switches can be operated in an active way (by actively controlling turning-on and turning-off of the MOSFETs), or in a passive way (by turning off the MOSFETs and exploiting the internal parasitic diode). Alternatively, the second, third, and fourth switches are obtained with a different technology; for example, they can be p-channel MOSFETs, or NPN or PNP bipolar transistors, IGBTs, or the like.

Present on the output of the energy-scavenging interface is a capacitor adapted to store the power transferred at output by the scavenging interface 4. In parallel to the capacitor there may be present an electrical load, which is supplied by means of the energy accumulated in the capacitor. As has already been said, between the capacitor and the electrical load there can be set a DC-DC converter, of a buck, or boost, or buck/boost type.

The energy-scavenging interface according to the present invention is described in detail with reference to a preferred application thereof, in particular as rectifier circuit of an energy harvesting system set between an AC voltage source and a storage element and/or electrical load.

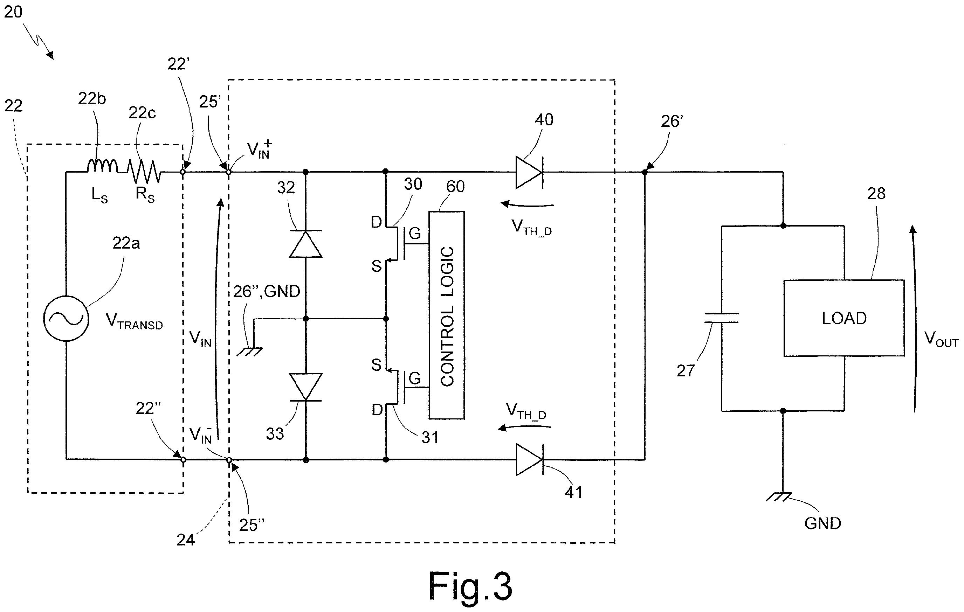

Figure 3 shows an energy harvesting system 20 comprising a rectifier circuit 24 (which, as has been said, has the function of energy-scavenging interface), according to one embodiment of the present invention.

In general, the energy harvesting system 20 comprises: a transducer 22 including output terminals 22', 22" of its own; the rectifier circuit 24, including a first input terminal 25' and a second input terminal 25", which are electrically coupled, respectively, to the output terminals 22', 22" of the transducer 22, and a first output terminal 26' and a second output terminal 26"; and a storage element 27, for example a capacitor, which is connected between the first output terminal 26' and the second output terminal 26" of the rectifier circuit 24, and is configured for storing electrical charge supplied at output by the rectifier circuit 24.

According to one embodiment of the present invention, the second output terminal 26" is a terminal at reference voltage, for example at ground voltage GND, for example at approximately 0 V. Other reference voltages can be used.

The transducer 22 is, for example, an electromagnetic transducer, and is illustrated schematically, in Figure 3, in a way similar to the one already shown in Figure 2, including an equivalent voltage generator 22a, adapted to supply a voltage $V_{TRANSD}$, an inductor 22b (the inductor that forms the electromagnetic transducer), having a value of inductance $L_S$, and a resistor 22c, having a value of resistance $R_S$, connected in series to the inductor 22b.

On the output of the rectifier circuit 24, in parallel to the storage element 27, there can be connected an electrical load 28, adapted to be supplied by the charge stored in the storage element 27, or a DC-DC converter in the case where the electrical load requires a voltage value different from the one generated at output by the rectifier circuit 24.

Connected between the first input terminal 25' and the second output terminal 26" of the rectifier circuit 24 is a first switch 30, in particular of a voltage-controlled type. The first switch 30 is, for example, an n-type MOSFET. Connected between the second input terminal 25" and the second output terminal 26" is a second switch 31, in particular of a voltage-controlled type. Also the second switch 31 is, for example, an n-type MOSFET.

For simplicity of description in what follows the first and second switches 30, 31 will be referred to, respectively, as first and second transistors 30, 31, without this implying any loss of generality. Likewise, by the term "transistor closed" is meant in what follows a transistor biased in such a way as to enable conduction of electric current between its source and drain terminals, i.e., configured for behaving as a closed switch, and by the term "transistor open" is meant in what follows a transistor biased in such a way as to not enable conduction of electric current between its source and drain terminals, i.e., configured for behaving as an open switch.

Represented between the source terminal S and the drain terminal D of the first transistor 30, is a first diode 32, in configuration known as "antiparallel configuration" (with respect to the normal direction of flow of the current through the first transistor 30). As is known, a characteristic of a MOSFET is that of displaying, under certain operating conditions, the electrical properties of a diode (parasitic diode). Said diode is electrically set (integrated) between the source and drain terminals of the MOSFET. In other words, the first transistor 30 can present the electrical behaviour of a diode, where the cathode of the diode corresponds to the drain terminal and the anode to the source terminal of the first transistor 30 (vice versa in the case of p-type MOSFETs). The first diode 32 is hence the diode integrated in the first transistor 30.

Likewise, a second diode 33 is represented connected in antiparallel configuration between the source terminal S and the drain terminal D of the second transistor 31; also in this case, the second diode 33 is the diode integrated in the second transistor 31.

In greater detail, the drain terminal D of the first transistor 30 is connected to the first input terminal 25' of the rectifier circuit 24, and the source terminal S of the first transistor 30 is connected to the second output terminal 26". The drain terminal D of the second transistor 31 is connected to the second input terminal 25" of the rectifier circuit 24, and the source terminal S of the second transistor 31 is connected to the second output terminal 26".

The rectifier circuit 24 further comprises a third diode 40 and a fourth diode 41. The third diode 40 has the anode terminal connected to the first input terminal 25' and the cathode terminal connected to the first output terminal 26' of the rectifier circuit 24. The fourth diode 41 has the anode terminal connected to the second input terminal 25" and the cathode terminal connected to the first output terminal 26' of the rectifier circuit 24.

During the positive half-cycles of the voltage of the transducer $V_{TRANSD}$, voltage rectification is carried out by means of the first transistor 30 and the third diode 40; instead, during the negative half-cycles of the voltage of the transducer $V_{TRANSD}$, voltage rectification is carried out by means of the second transistor 31 and the fourth diode 41.

In particular, in the positive half-cycles of the voltage $V_{TRANSD}$ of the transducer 22, a control logic 60 keeps the second transistor 31 open and opens/closes the first transistor 30 according to a control method described in detail in what follows. Said control method envisages that the first transistor 30 will be kept closed until a given time interval ($T_{DELAY}$) has elapsed and a minimum threshold value $I_{TH}$ of the current that flows in the inductor 22b has been reached. When both of these conditions are met, the control logic 60 opens the first transistor 30, and the energy accumulated in the inductor 22b is transferred onto the capacitor 27 through the third diode 40. When the current in the inductor 22b goes to zero, the control logic 60 closes the first transistor 30 again, and the steps described start again in a cyclic way.

Likewise, for negative polarities of the signal $V_{TRANSD}$ of the transducer 22, the first transistor 30 is kept closed whilst the second transistor 31 is opened/closed in a way similar to what has been described previously with reference to the first transistor 30. In this case, the energy accumulated in the inductor 22b is transferred onto the capacitor 27 through the fourth diode 41.

As has been said, the steps described for operating the first transistor 30 for positive values of polarity of the input signal $V_{IN}$ are similar to the steps for operating the second transistor 31 for negative values of polarity of the input signal $V_{IN}$. Likewise, the circuit structure of the rectifier 24 is symmetrical.

In what follows, operation of the rectifier 24 will be described more fully with reference to a circuit model that applies to one polarity (in particular just the positive polarity) of the input signal $V_{IN}$, but can be readily applied, in a symmetrical way, to operation for negative polarities of the input signal $V_{IN}$.

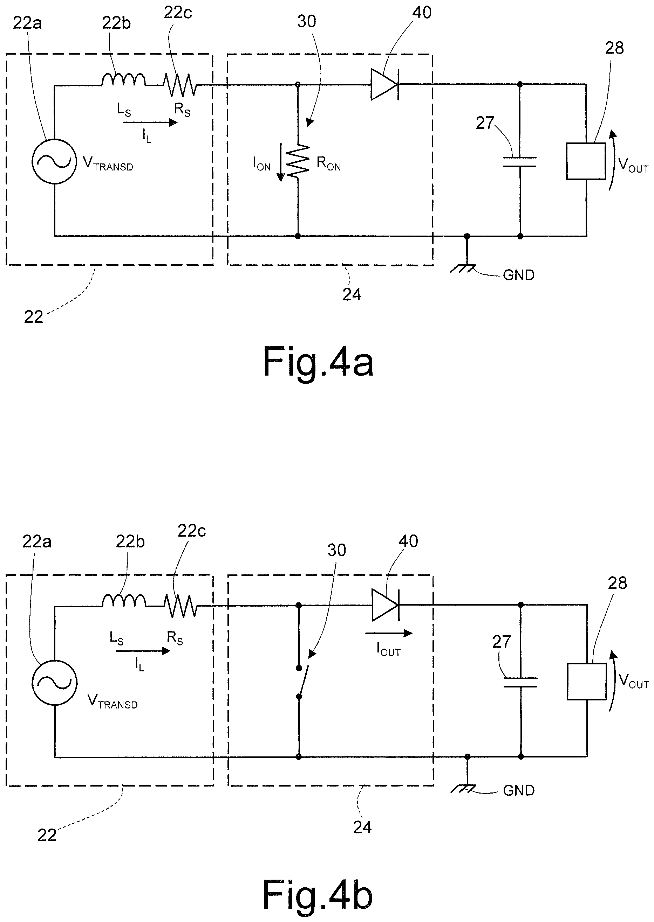

Figure 4a shows a circuit equivalent to the circuit of Figure 3 in which the second transistor 31 is closed, and is consequently replaced by an (ideal) short circuit.

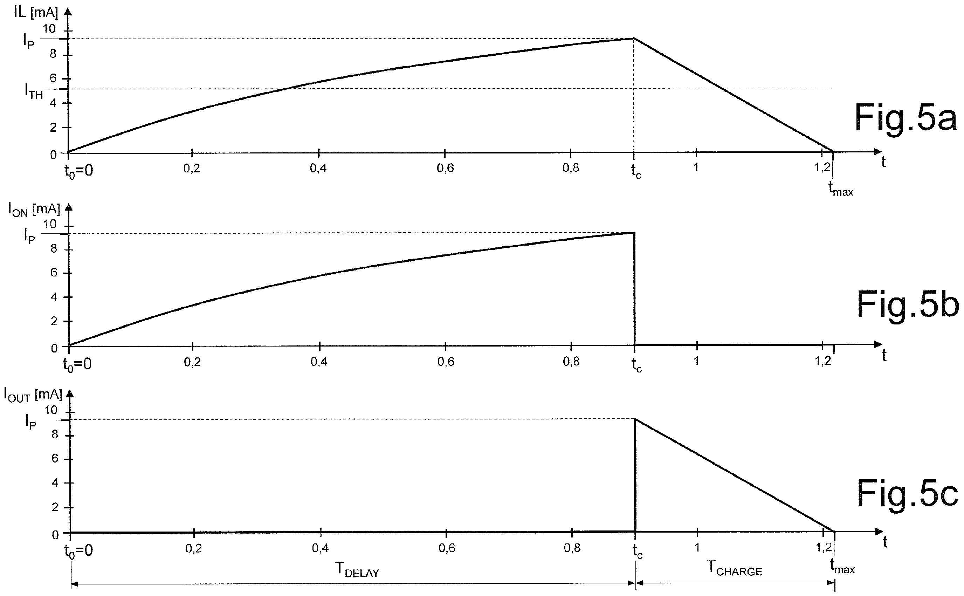

In this situation, the first transistor 30 presents an on-state resistance equal to $R_{ON}$. The current $I_L$ that flows in the inductor 22b is equal to the current $I_{ON}$ that flows through the on-state resistance $R_{ON}$ of the first transistor 30. The value of the current $I_L$ grows in a way proportional to the value of the constant $L_S/R_S$, until it reaches a steady-state value $I_P \approx V_{TRANSD}/R_S$ (see the graph of Figure 5a).

Once the time interval $T_{DELAY}$ has elapsed, and assuming that the current $I_L$ that flows in the inductor 22b has reached a value equal to, or higher than, the threshold value $I_{TH}$, control passes to the operating condition illustrated schematically in Figure 4b.

The time interval $T_{DELAY}$ is the interval elapsing between the instant of closing of the first transistor 30 ($t_0$) and the instant of opening of the first transistor 30 ($t_c$). The threshold current value $I_{TH}$ is chosen on the basis of the current peak values Ip that are reached according to the application of the rectifier circuit 24. These values depend upon the characteristics of the transducer 22 and upon the environmental stresses to which the transducer 22 is subjected. In particular, the threshold current value $I_{TH}$ is chosen much smaller than the peak value $I_p$ that is expected to be reached in the application in which the rectifier circuit 24 is used. For example, if we assume that peak values Ip of approximately 150 mA are to be reached, the threshold $I_{TH}$ can be chosen between approximately 5 mA and 10 mA.

With reference to Figure 4b, at time $t_c$, the first transistor 30 is opened and the current $I_L$ that flows in the inductor 22b is the current $I_{OUT}$ supplied at output by the rectifier 24. The current in the inductor 22b decreases with a constant slope, until it reaches the zero value (at time $t_{max}$, see again Figure 5a), according to the relation:

$$\frac{dI_L}{dt} = \frac{V_{OUT} + V_{BE} - V_{TRANSD}}{L_S}$$

where $V_{BE}$ is the direct voltage drop across the third diode 40.

Figure 5a shows the plot of the current $I_L$ in time t. The curve of the current $I_L$ reaches the maximum value $I_P$ at instant $t_c$, in which the first transistor 30 is opened (see Figure 5b). The current $I_L$ in the time interval $t_0$-$t_c$ (interval $T_{DELAY}$; it is assumed, for simplicity, that $t_0 = 0$ s) grows according to the following relation:

$$\frac{V_{TRANSD}}{R_S} \left( 1 - e^{-\frac{t}{\tau_{TRANSD}}} \right)$$

where $\tau_{TRANSD}$ is the time constant of the transducer 22, given by $\tau_{TRANSD} = L_S/R_S$. The time constant of a transducer is, typically, defined as the time necessary in order for the output of the transducer to reach a percentage value (e.g., 63%) of the final value, in the case where the input of the transducer undergoes a sharp variation (step signal).

Then, between $t_c$ and $t_{max}$ (time interval $T_{CHARGE}$) the current $I_L$ decreases until it reaches the value $I_L = 0$ A.

Figure 5b shows, using the same time scale as that of Figure 5a, the plot of the current $I_{ON}$ that flows through the first transistor 30.

In the time interval $t_0$-$t_c$ the current $I_{ON}$ coincides with the current $I_L$ (we are, in fact, in the situation of Figure 4a); at instant $t_c$, the first transistor 30 is opened (Figure 5b) and the current $I_{ON}$ drops to zero.

Figure 5c shows, using the same time scale as that of Figures 5a and 5b, the plot of the output current $I_{OUT}$. The current $I_{OUT}$ remains at a zero value during the time interval $t_0$-$t_c$, and then increases to the value $I_P$ at instant $t_c$ (upon opening of the first transistor 30). Then, between $t_c$ and $t_{max}$ (time interval $T_{CHAPGE}$) the output current $I_{OUT}$ coincides with the current $I_L$.

The time interval $T_{CHARGE}$ is given by:

$$T_{CHARGE} = L_S \frac{I_P}{V_{OUT} + V_{TH\_D} + V_S}$$

where $V_{TH\_D}$ is the threshold voltage of the third diode 40.

At time $t_{max}$, the first transistor 30 is again closed, and the inductor 22b is charged, according to what has already been described. The steps of charging and discharging of the inductor 22b (and, consequently, of supply of the capacitor 27/load 28) are repeated in a cyclic way.

The integral of the curve of $I_{OUT}$ (Figure 5c) between time $t_c$ and time $t_{max}$ indicates the charge $Q_{CYCLE}$ transferred between the input and the output of the rectifier 24 in time $T_{CHARGE}$. In order to maximize the efficiency of transfer of charge between the input and the output of the rectifier 24, it is expedient to maximize the value of the power $P_{CYCLE}$ transferred at output at each cycle of charge/discharge of the inductor 22b. The power $P_{CYCLE}$ is defined as $P_{CYCLE} = V_{OUT} \cdot I_{CYCLE}$, where $I_{CYCLE}$ is given by $ICYCLE = Q_{CYCLE}/T_{CYCLE}$, where $T_{CYCLE}$ is the time interval elapsing between to and $t_{max}$ ($T_{CYCLE} = T_{DELAY} + T_{CHARGE}$).

The present applicant has found that the value of $P_{CYCLE}$ is given by the following formula:

$$P_{CYCLE} = \frac{L_S \cdot \left[ \frac{V_{TRANSD}}{R_S} \cdot \left( 1 - e^{-\frac{\tau_{DELAY}}{\tau_{TRANSD}}} \right) \right]^2}{2 \cdot \left( V_{OUT} - V_{TRANSD} \right) \cdot \left[ T_{DELAY} + \frac{T_{DELAY} \cdot V_{TRANSD} \cdot \left( 1 - e^{-\frac{\tau_{DELAY}}{\tau_{TRANSD}}} \right)}{V_{OUT} - V_{TRANSD}} \right]} \cdot V_{OUT}$$

The optimization of the value of $P_{CYCLE}$ enables an optimal value of the time interval $T_{DELAY}$ to be obtained as a function of the value of $V_{TRANSD}$ and $V_{OUT}$. However, the present applicant has found that the dependence of $T_{DELAY}$ upon $V_{TRANSD}$ and $V_{OUT}$ is negligible for practical purposes, and $T_{DELAY}$ is chosen proportional to $\tau_{TRANSD}$, for example comprised between approximately $1 \cdot \tau_{TRANSD}$ and approximately $2 \cdot \tau_{TRANSD}$, in particular approximately $1.5 \cdot \tau_{TRANSD}$. In the particular case considered, the time constant $\tau_{TRANSD}$ of the transducer 2 is, as has already been said previously, equal to $L_S/R_S$. However, for other types of transducer, the time constant $\tau_{TRANSD}$ can be defined in a different way.

The value of $T_{DELAY}$ chosen is an optimal value irrespective of the value assumed by $V_{TRANSD}$ and $V_{OUT}$. This enables a value of coupling efficiency $\eta_{COUPLE}$ to be obtained that is particularly high, and substantially independent of the voltage $V_{TRANSD}$ developed by the transducer 2 and of the voltage accumulated at output $V_{OUT}$.

The coupling efficiency uncouple is given by $P_{CYCLE}^{OPT}/P_{TRANSD}^{MAX}$, where $P_{CYCLE}^{OPT}$ is the value of $P_{CYCLE}$ calculated as $T_{DELAY}=1.5\ L_S/R_S$, and $P_{TRANSD}^{MAX}$ is given by $(V_{TRANSD})^2/4R_S$.

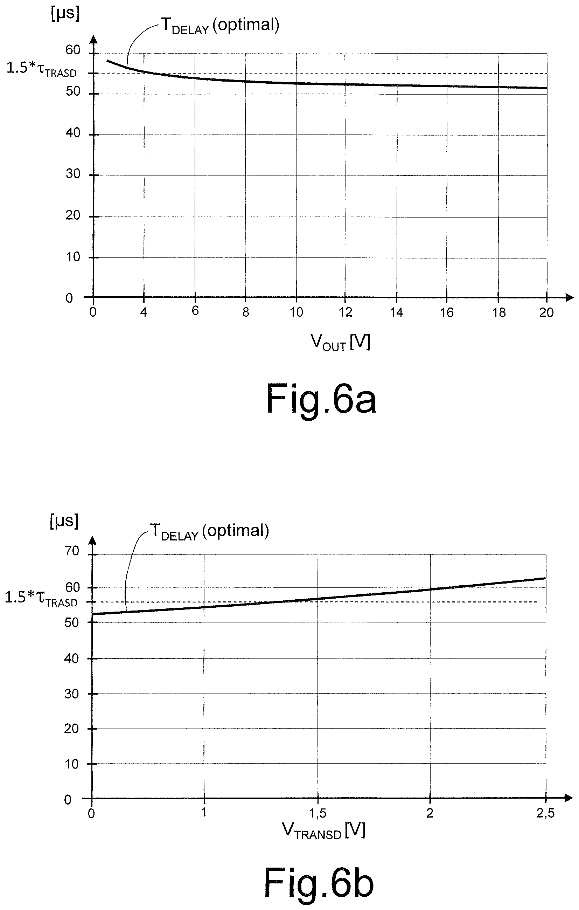

Figures 6a and 6b show the plots of the optimal value $T_{DELAY}$ as the voltage on the capacitor 27/load 28 varies (Figure 6a) and as the equivalent voltage of the transducer $V_{TRANSD}$ and, hence, the voltage $V_{IN}$ at input to the rectifier 24 vary (Figure 6b).

As may be noted from Figures 6a and 6b, the value $1.5 \cdot \tau_{TRANSD}$ represents an optimal compromise for all the values that $V_{OUT}$ and $V_{TRANSD}$ can assume (and, in use, is not known beforehand). However, if the voltages $V_{OUT}$ and/or $V_{TRANSD}$ are known, or in any case limited within a certain predefined interval, the constant value chosen for $T_{DELAY}$ may differ from $1.5 \cdot \tau_{TRANSD}$, and possibly may also be chosen outside the interval $(\tau_{TRANSD}, ... 2 \cdot \tau_{TRANSD})$ so as to adapt better to the particular operating condition.

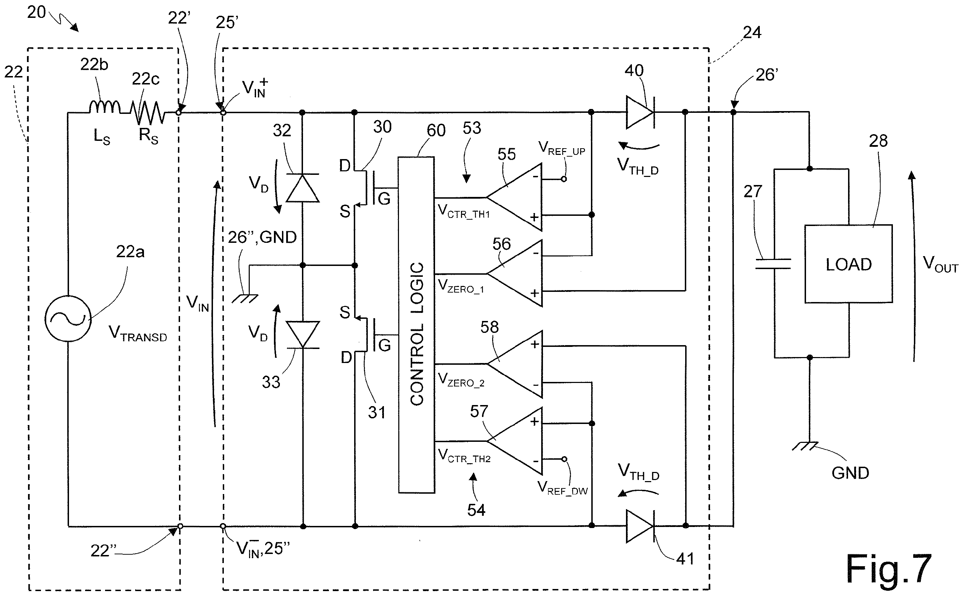

Figure 7 shows the system of Figure 3 comprising further electronic components adapted to control operation of the first and second transistors 30, 31.

To drive appropriately the first and second transistors 30, 31, a respective first driving circuit 53 and second driving circuit 54 are connected to the control terminal (gate terminal G) of the first transistor 30 and the second transistor 31, respectively.

The first driving circuit 53 comprises a first comparator 55 connected to the control logic 60, and a second comparator 56, which is also connected to the control logic 60. The first comparator 55 includes an inverting input terminal configured for receiving a reference signal $V_{REF\_UP}$ and a non-inverting input terminal coupled to the anode of the third diode 40; the reference signal $V_{REF\_UP}$ is given by $I_{TH} \cdot R_{ON\_UP}$, where $R_{ON\_UP}$ is the value of the on-state resistance of the first transistor 30. The second comparator 56 includes a non-inverting input terminal coupled to the anode of the fourth diode 40, and an inverting input terminal coupled to the cathode of the fourth diode 40.

The second driving circuit 54 comprises a third comparator 57 connected to the control logic 60, and a fourth comparator 58 connected to the control logic 60. The third comparator 57 includes an inverting input terminal configured for receiving a reference signal $V_{REF\_DW}$ and a non-inverting input terminal coupled to the anode of the second diode 41; the reference signal $V_{REF\_DW}$ is given by $I_{TH} \cdot R_{ON\_DW}$, where $R_{ON\_DW}$ is the value of on-state resistance of the second transistor 31. The fourth comparator 58 includes a non-inverting input terminal coupled to the anode of the second diode 41, and an inverting input terminal coupled to the cathode of the second diode 41.

In turn, the control logic 60 is coupled to the control terminals G of the first and second transistors 30, 31, for controlling operation thereof (i.e., for driving into conduction or inhibition the first and second transistors 30, 31) as described in greater detail in what follows.

In a way similar to what has been said previously, operation of the system 20 of Figure 7 can be described with reference to the first driving circuit 53 alone, for positive polarities of the input signal $V_{IN}$. The operating steps of the second driving circuit 54, for negative polarities of the input signal $V_{IN}$, are equivalent and evident for a person skilled in the branch in the light of what has been described herein.

With reference to the first driving circuit 53, the first comparator 55 receives at input the reference voltage $V_{REF\_UP}$ (inverting input terminal) and the voltage $V_{IN}^+$ (non-inverting input terminal) and is configured for detecting, during the step of charging of the inductor 22b, according to the schematic representation of Figure 4a, whether the current $I_{ON}$ that flows through the first transistor 30 (and hence the current $I_L$) reaches the threshold current value $I_{TH}$. The control signal $V_{ctr\_th1}$ generated at output by the first comparator 55 assumes two values, and in particular a first value indicating a value of current $I_{ON}$ (and hence of $I_L$) lower than the threshold current value $I_{TH}$, and a second value indicating a value of current $I_{ON}$ (and hence of $I_L$) equal to or higher than the threshold current value $I_{TH}$.

The second comparator 56 receives at input the voltage value $V_{TH\_D}$ on the third diode 40 and is configured for detecting, during the step of discharge of the inductor 22b, according to the schematic representation of Figure 4b, whether the current $I_{OUT}$ that flows through the third diode 40 for supplying the capacitor 27/load 28 reaches a zero value. The control signal $V_{zero1}$ generated at output by the second comparator 56 is, for example, a digital signal that assumes two values, and in particular a first value indicating a current value $I_{OUT}$ greater than zero (identifying an anode potential higher than the cathode potential of the third diode 40), and a second value indicating a current value $I_{OUT}$ equal to zero (identifying an anode potential lower than the cathode potential of the third diode 40).

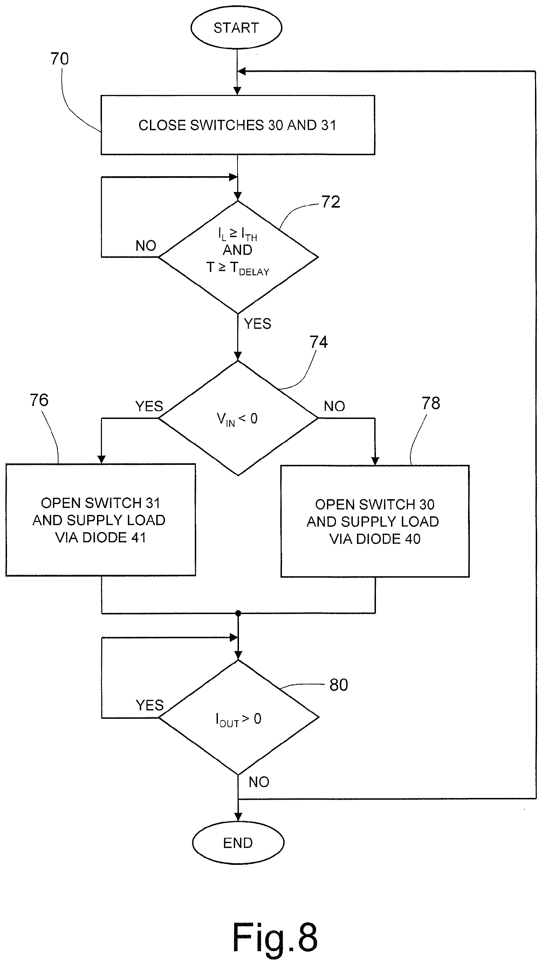

The control logic 60 implements the method for control of the first and second transistors 30, 31 described previously, and shown schematically in Figure 8, by means of a flowchart.

With reference to Figure 8 (step 70), the first and third transistors 30 and 31 are closed. In this way, the inductor 22b is charged via the current $I_L = I_{ON}$ that flows through the first and second transistors 30, 31.

The current value $I_L = I_{ON}$ is monitored (step 72) as already described with reference to Figure 7, for detecting whether it reaches (or exceeds) the threshold value $I_{TH}$ required. At the same time, the control logic 60 monitors the time interval $T_{DELAY}$. In this case, time to of start of the time interval $T_{DELAY}$ corresponds to the instant of closing of the first and second transistors 30, 31, according to step 70.

In the case where the current $I_L$ has not reached the threshold $I_{TH}$ or the time $T_{DELAY}$ has not elapsed (output NO from step 72), it is necessary to wait for both of these conditions to be met and the control logic 60 maintains the system 20 in the states 70, 72 until both of the conditions $T = T_{DELAY}$ and $T = I_{TH}$ are met; otherwise (output YES from step 72), control passes to the next step 74. It is to be noted that, once the time $T_{DELAY}$ has elapsed, if the current $I_L$ has not yet reached the threshold $I_{TH}$, the transistors 30 and 31 are kept closed until $T = I_{TH}$ • All the advantages referred to are in any case guaranteed.

During step 74, a check is made to see whether the input voltage $V_{IN}$ has positive or negative polarity. This control is carried out using the comparators 55 and 57, connected, respectively, to the first input terminal 25' and to the second input terminal 25" of the rectifier 24, for receiving the positive half-wave $V_{IN}^+$ and the negative half-wave $V_{IN}^-$, respectively, of the input voltage $V_{IN}$.

In the case where the input voltage $V_{IN}$ has negative polarity, control passes to step 76 (output YES from step 74), where the third switch 31 is opened, thus supplying the capacitor 27/load 28 via the second diode 41.

Instead, in the case where the input voltage $V_{IN}$ has positive polarity, control passes to step 78 (output NO from step 74), where the first switch 30 is opened for supplying the capacitor 27/load 28 via the fourth diode 40.

Output from steps 76 and 78 leads to step 80, where the control logic 60 monitors the value of current $I_{OUT}$ that flows through the fourth diode 40 (or the second diode 41 according to the polarity of the input voltage $V_{IN}$) to the output of the rectifier 24 for detecting whether the current $I_{OUT}$ assumes a value approximately equal to zero. As long as $I_{OUT} > 0$ A, the control logic 60 maintains the system 20 in the step of charging of the capacitor 27/supply of the load 28. When $I_{OUT} = 0$ A, control returns to step 70. Steps 70-74 are carried out, as described with reference to Figures 5a-5c, in a time interval equal to $T_{DELAY}$, whilst steps 76-80 are carried out in a time interval equal to $T_{CHARGE}$.

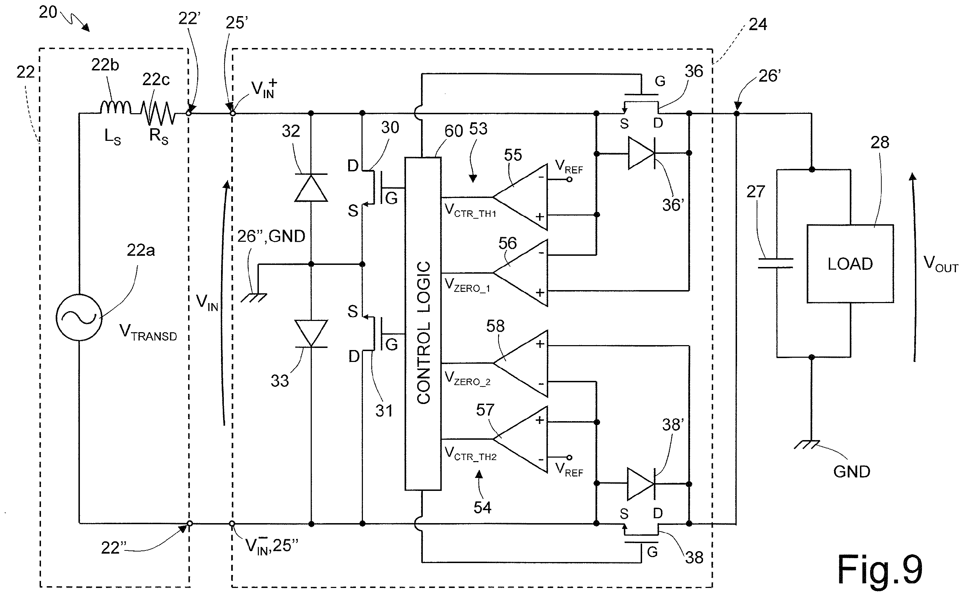

According to an alternative embodiment of the present invention (shown in Figure 9), the third and fourth diodes 40 and 41 are replaced by a respective third switch 36 and fourth switch 38, which are controlled in opening/closing by the control logic 60.

The third switch 36 is connected between the first input terminal 25' and the first output terminal 26' of the rectifier circuit 24, whilst the fourth switch 38 is connected between the second input terminal 25" and the first output terminal 26' of the rectifier circuit 24.

In a way similar to what has been said for the first and second switches 30, 31, also the third and fourth switches 31, 38 are, for example, n-type MOSFETs, shown in Figure 9 with the respective parasitic diode 36' and 38' in antiparallel configuration. In what follows, the third and fourth switches 36 and 38 will be referred to as third and fourth transistors 36 and 38, without this implying any loss of generality. Also in this case, the term "transistor closed" will refer to a transistor biased so as to behave as a closed switch; and the term "transistor open" will refer to a transistor biased so as to behave as an open switch.

The source terminal S and the drain terminal D of the third transistor 36 are connected, respectively, to the first input terminal 26' and to the first output terminal 26' of the rectifier circuit 24; the source terminal S and the drain terminal D of the fourth transistor 38 are connected, respectively, to the second input terminal 25" and to the first output terminal 26' of the rectifier circuit 24.

During the steps of charging of the inductor 22b, considering an input voltage $V_{IN}$ with positive polarity, the control logic 60 drives the first transistor 30 and the second transistor 31 into a closed state, and the third transistor 36 and the fourth transistor 38 into an open state; in this way, the situation of Figure 4a presents, and the inductor 22b can be charged. During the steps of discharge of the inductor 22b and supply of the capacitor 27/load 28, once again considering an input voltage $V_{IN}$ with positive polarity, the control logic 60 drives the first transistor 30 into an open state and the third transistor 36 into a closed state. In this way, the situation of Figure 4b presents, and the capacitor 27/load 28 can be supplied.

Likewise, considering an input voltage $V_{IN}$ with negative polarity, during the steps of charging of the inductor 22b, the control logic 60 drives the first and second transistors 30, 31 into a closed state and the third and fourth transistors 36, 38 into an open state. Instead, during the steps of discharge of the inductor 22b and supply of the capacitor 27/load 28, once again considering an input voltage $V_{IN}$ with negative polarity, the control logic 60 drives the second transistor 31 into an open state and the fourth transistor 38 into a closed state.

By actively controlling the third and fourth transistors 36, 38 there is the advantage, as compared to the passive embodiment of Figure 7, that the transfer of energy stored in the inductor 22b to the output (capacitor 27/load 28) is more efficient in so far as, during the transfer of energy, the voltage drop across the transistor is lower than the voltage drop across a diode.

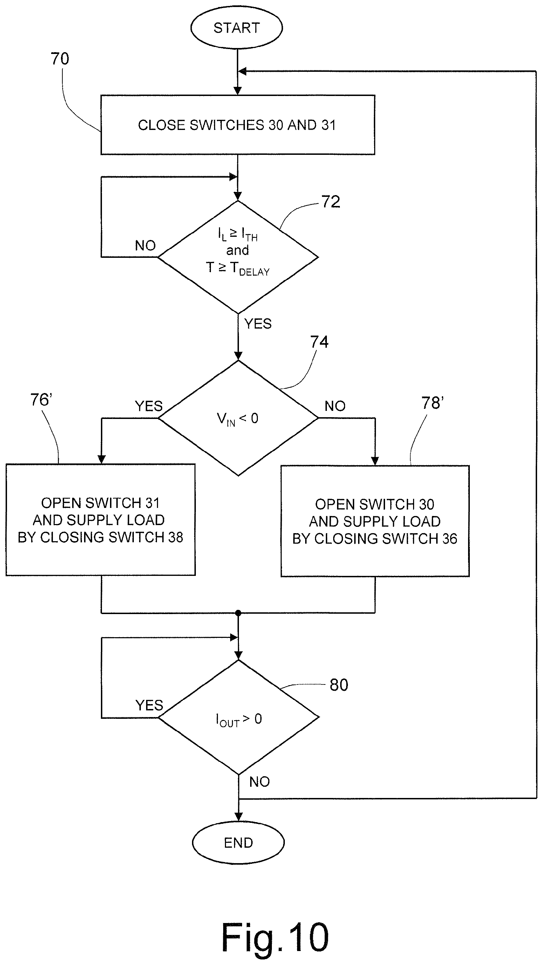

Figure 10 shows, by means of a flowchart, the steps of a method implemented by the control logic 60 for operating the transistors 30, 31, 36, 38 of the rectifier 24 of Figure 9.

Steps 70-74 of Figure 10 correspond to steps 70- 74 of Figure 8 (and are for this reason designated by the same reference number and are not described any further herein).

Output YES from step 74 (input voltage $V_{IN}$ with negative polarity) leads to step 76'. Step 76' of Figure 10 corresponds substantially to step 76 of Figure 8. However, according to step 76' of Figure 10, the control logic 60, in addition to opening the second transistor 31, drives also the fourth transistor 38 into a closed state. The first transistor 30 remains in the closed state, and the third transistor 36 remains in the open state. The capacitor 27/load 28 are supplied by the current $I_{OUT}$ that flows through the fourth transistor 38.

Output NO from step 74 (input voltage $V_{IN}$ with positive polarity) leads to step 78'. Also in this case, step 78' of Figure 10 corresponds substantially to step 78 of Figure 8. According to step 78', the control logic 60 opens the first transistor 30 and closes the third transistor 36. The second transistor 31 remains in the closed state, and the fourth transistor 38 remains in the open state. Hence, the capacitor 27/load 28 are supplied by the current $I_{OUT}$ that flows through the third transistor 36.

From steps 74' and 76' control passes to step 80, already described with reference to Figure 8.

The control logic 60 is, for example, a microcontroller, configured for driving the first and second transistors 30 and 31 for carrying out the steps of the method of Figure 8 (energy harvesting system 20 of Figure 7), or for moreover driving the third and fourth transistors 36, 38, for carrying out the steps of the method of Figure 10 (energy harvesting system 20 of Figure 9).

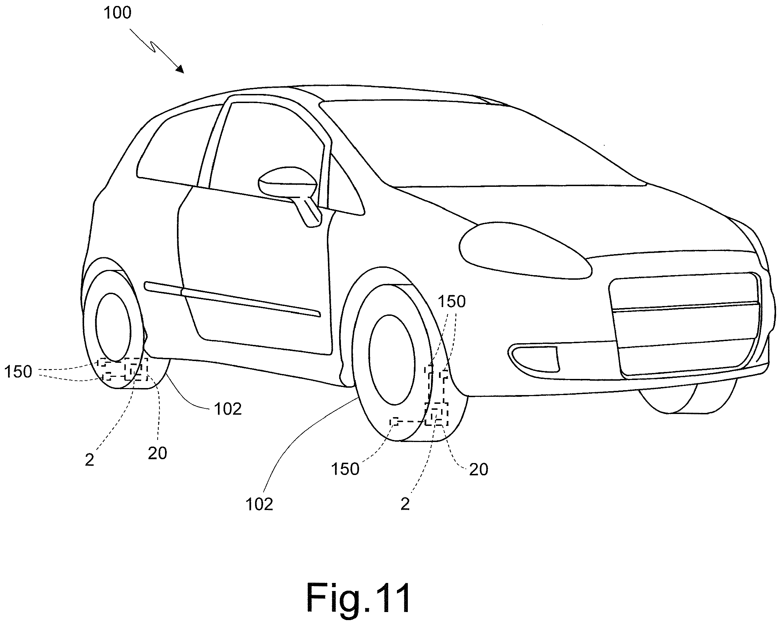

Figure 11 shows a vehicle 100 comprising the energy harvesting system 20 of Figure 7 or Figure 9. The vehicle 100 is, in particular, an automobile. It is evident, however, that the energy harvesting system 20 can be used in any vehicle 100 or in systems or apparatuses other than a vehicle. In particular, the energy harvesting system 20 can find application in generic systems, in which it is desirable to harvest, store, and use environmental energy, in particular by means of conversion of mechanical energy into electrical energy.

With reference to Figure 11, the vehicle 100 comprises one or more transducers 2 coupled in a known way to a portion of the vehicle 100 subject to mechanical stresses and/or vibrations, for converting said mechanical stresses and/or vibrations into electric current.

The energy harvesting system 20 is connected to one or more electrical loads 28a, ..., 28n, for example via interposition of a DC-DC converter. In particular, according to one application of the present invention, the electrical loads 28a, ..., 28n comprise TPM (tyre-parameter monitoring) sensors 150 for monitoring parameters of tyres 102. In this case, the TPM sensors 150 are coupled to an internal portion of the tyres 102 of the vehicle 100. Likewise, also the transducers 2 (for example, of an electromagnetic or piezoelectric type) are coupled to an internal portion of the tyres 102. The stress of the transducers 2 when the vehicle 100 is travelling causes production of an electric current/voltage signal at output from the transducer 2 by means of conversion of mechanical energy into electrical energy. The electrical energy thus produced is stored, as described previously, in the storage element 27 and supplied, via the DC-DC converter that may be present, to the TPM sensors 150.

According to one embodiment of the present invention, the energy harvesting system 20, comprising one or more transducers, and the TPM sensors 150, are glued within one or more tyres 102. The impact of the tyres 102 on the ground during motion of the vehicle 100 enables production of electrical energy.

As an alternative to what is shown in Figure 11, the energy harvesting system 20 can be set in any other portion of the vehicle 100 and/or used for supplying an electrical load different from or in addition to the TPM sensors 150.

Another possible application of the energy harvesting system 20 is the generation of electrical energy by exploiting the mechanical energy produced by an individual when he is walking or running. In this case, the energy harvesting system 20 is located inside the shoes of said individual (for example, inside the sole). In systems aimed at fitness, where it is particularly interesting to count the steps, it is useful to recover energy from the vibrations induced by walking/running to be able to supply, without using a battery, acceleration sensors and/or RFID transmitters capable of communicating with cellphones, music-playing devices, or any other apparatus involved in information on the steps performed.

From an examination of the characteristics of the invention obtained according to the present disclosure the advantages that it affords are evident.

In particular, since the duration of the time interval $T_{DELAY}$ is (typically) constant, the rectifier 24 operates at constant duty cycle of the signal of opening/closing of the first and second switches 30, 31; this enables efficiency values $\eta_{SCAV}$ (efficiency of the rectifier 24, having the function of scavenging interface of the system 20) comprised between 70% and 85% to be obtained. With reference to Figure 11, the efficiency values $\eta_{SCAV}$ indicated are substantially independent of the speed of rotation of the tyres 102 and of the conditions of storage of the energy so as to satisfy the requirements of the TPM sensors 150.

The HV technology used for the capacitor 27 and for the scavenging interface enables storage of high voltages, and hence high energy, in the capacitor 27, consequently increasing the autonomy of operation of the TPM sensors 150.

Furthermore, as has been said, the value of the interval $T_{DELAY}$ can be varied according to the particular application in which the rectifier circuit 24 operates. The rectifier 24 then finds use in systems different from the energy harvesting system 20, based upon electromagnetic transducers of any type.

Furthermore, the rectifier circuit 24 can be used with transducers of another type, by means of interposition of an appropriate circuit between the transducer and the rectifier circuit adapted to provide an energy accumulator similar to the inductor 22b.

Furthermore, the rectifier circuit 24 according to the present invention and the energy harvesting system 20 are of a completely integrated type, and consequently require minimum space for installation.

Finally, recovery of environmental energy occurs also when the signal of the transducer is lower than the voltage value accumulated on the output capacitor, which is not possible using a diode-bridge interface of a known type, as shown in Figure 1. According to the present invention, the scavenging interface 24 is hence able to recover energy also when the power supplied by the transducer is very low.

Finally, it is clear that modifications and variations may be made to what has been described and illustrated herein, without thereby departing from the sphere of protection of the present invention, as defined in the annexed claims.

In particular, according to one embodiment of the present invention, the rectifier circuit 24 can comprise a number of transistors/diodes different from the one described. For example, the rectifier circuit 24 can be a half-wave rectifier, comprising just two transistors, for example just the transistors 30 and 36, or else just the transistors 31 and 38, or else comprising the first transistor 30 and the diode 40, or the second transistor 31 and the diode 41. Use of a half-wave rectifier can be advantageous in the case where the input signal $V_{IN}$ is of a known type and comprises only positive (or negative) half-waves. Its use is, however, not recommended if the input signal has a positive or negative polarity.

In addition, there may be present a plurality of transducers 2, all of the same type or of a type different from one another, indifferently. For example, the transducer/transducers can be chosen in the group comprising: electrochemical transducers (adapted to convert chemical energy into an electrical signal), electromechanical transducers (adapted to convert mechanical energy into an electrical signal), electroacoustic transducers (adapted to convert variations of pressure into an electrical signal), electromagnetic transducers (adapted to convert a magnetic field into an electrical signal), photoelectric transducers (adapted to convert light energy into an electrical signal), electrostatic transducers, thermoelectrical transducers, piezoelectric transducers, thermoacoustic transducers, thermomagnetic transducers, or thermoionic transducers.

**Claims**

1. An energy-scavenging interface (24) having a first input terminal (25') and a second input terminal (25") connectable to a transducer (22) which includes a storage element (22b), and a first output terminal (26') and a second output terminal (26") which is connectable to an electrical load (27, 28), wherein the first and second input terminals are configured to receive an electrical input signal ($V_{TRANSD}$, $V_{IN}$) having a first polarity and a second polarity of opposite sign with respect to one another, generated by the transducer (22), and the first and second output terminals are configured to supply to the electrical load an output signal ($V_{OUT}$), the energy-scavenging interface (24) comprising:

   - a first switch (30) connected between the first input terminal (25') and the second output terminal (26");
   - a first current-conduction element (36), connected between the first input terminal (25') and the first output terminal (26'); and
   - a control logic (60) configured for:

driving, when the electrical input signal has the first polarity, the first switch (30) in a closed state for a first time interval having at least one first temporal duration ($T_{DELAY}$) proportional to the time constant ($\tau_{TRANSD}$) of the transducer (22), in which the storage element (22b) stores electrical energy, and until the electrical energy accumulated by the storage element (22b) reaches a first threshold value ($I_{TH}$) ; and

driving the first switch (30) in an open state for a second time interval, having a second temporal duration ($T_{CHARGE}$) and subsequent to the first time interval, in which the electrical load (27, 28) is supplied through the first current-conduction element (36) by means of the electrical charge accumulated in the storage element (22b),

**characterized in that** the energy-scavenging interface further comprises a first electrical-signal detecting device (55) configured for:

- acquiring the electrical input signal when the electrical input signal has the first polarity;
- acquiring a reference signal ($V_{REF}$);
- comparing the electrical input signal acquired with the reference signal; and
- generating a control signal ($V_{ctr\_th1}$) when the energy accumulated by the storage element (22b) during the first time interval reaches said first threshold value ($I_{TH}$).

2. The energy-scavenging interface according to claim 1, comprising:

- a second switch (31) connected between the second input terminal (25") and the second output terminal (26");
- a second current-conduction element (38), connected between the second input terminal (25") and the first output terminal (26'),

wherein the control logic (60) is moreover configured for:

- driving, when the electrical input signal has the first polarity, the second switch (31) in a closed state;
- driving, when the electrical input signal has the second polarity, the first switch (30) and the second switch (31) in a closed state for a third time interval having at least the first temporal duration ($T_{DELAY}$) in which the storage element (22b) stores electrical energy, and until the electrical energy accumulated by the storage element (22b) reaches the first threshold value ($I_{TH}$); and
- driving the second switch (31) into an open state for a fourth time interval having the second temporal duration (TCHARGE), so as to supply the electrical load (27, 28) through the second current-conduction element (38) by means of the electrical charge accumulated in the storage element (22b).

3. The energy-scavenging interface according to claim 1 or 2, wherein the transducer (22) is an electromagnetic transducer having an equivalent value of inductance ($L_S$) and an equivalent value of resistance ($R_S$), said time constant ($\tau_{TRANSD}$) being given by the ratio between the equivalent value of inductance and the equivalent value of resistance.

4. The energy-scavenging interface according to any one of the preceding claims, wherein said first temporal duration ($T_{DELAY}$) has a constant value.

5. The energy-scavenging interface according to claim 4, wherein said first temporal duration ($T_{DELAY}$) is chosen equal to, approximately, 1.5 times the time constant ($\tau_{TRANSD}$) of the transducer (22).

6. The energy-scavenging interface according to any one of claims 2-5, further comprising a second electrical-signal detecting device (57) configured for:

- acquiring the electrical input signal when the electrical input signal has the second polarity;
- acquiring the reference signal ($V_{REF}$);
- comparing the electrical input signal acquired with the reference signal; and
- generating a control signal ($V_{ctr\_th1}$) when the energy accumulated by the storage element (22b) during the first time interval reaches the first threshold value ($I_{TH}$).

7. The energy-scavenging interface according to any one of the preceding claims, further comprising a third electrical-signal detecting device (56) configured for detecting, during the second time interval, a first value of output current ($I_{OUT}$) that flows between the first input terminal (25') and the first output terminal (26') through the first current-conduction element (36), the control logic (60) being moreover configured for driving, when the electrical input signal has the first polarity, the first switch (30) into the closed state if the first value of output current ($I_{OUT}$) is approximately zero and for driving, when the electrical input signal has the first polarity, the first switch (30) into the open state if the first value of output current ($I_{OUT}$) is greater than zero.

8. The energy-scavenging interface according to any one of claims 2-7, further comprising a fourth electrical-signal detecting device (58) configured for detecting, during the fourth time interval, a second value of output current ($I_{OUT}$) that flows between the second input terminal (25") and the first output terminal (26') through the second current-conduction element (38), the control logic (60) being moreover configured for driving, when the electrical input signal has the second polarity, the first and second switches (30, 31) into the closed state if the second value of output current ($I_{OUT}$) is approximately zero, and for driving, when the electrical input signal has the second polarity, the second switch (31) into the open state if the first value of output current ($I_{OUT}$) is greater than zero.

9. The energy-scavenging interface according to any one of the preceding claims, wherein the first current-conduction element (36) is a controlled switch, the control logic (60) being moreover configured for closing the first current-conduction element (36) during the second time interval and opening the first current-conduction element (36) during the first time interval.

10. The energy-scavenging interface according to any one of claims 2-9, wherein the second current-conduction element (38) is a controlled switch, the control logic (60) being moreover configured for closing the second current-conduction element (38) during the fourth time interval and opening the second current-conduction element (38) during the third time interval.

11. An energy harvesting system (20) configured to supply an electrical load (28), comprising:

- a transducer (22), configured for converting energy coming from a source of energy external to said system (20) into an AC electrical signal ($V_{TRANSD}$, $V_{IN}$);
- an electrical-energy-scavenging interface (24) according to any one of claims 1-10, configured for receiving at input the AC electrical signal and supplying at output a DC output signal ($V_{OUT}$) ;
- a first storage element (27) coupled to the electrical-energy-scavenging interface (24) for receiving at input the DC output signal ($V_{OUT}$) , and configured for accumulating electrical energy adapted to supply the electrical load (28).

12. The system according to claim 11, further comprising a DC-DC converter (6) connected between the first storage element (27) and the electrical load (28), said DC-DC converter (6) being configured for supplying the electrical load (28) via the electrical energy accumulated in the first storage element (27).

13. An apparatus (100) comprising the energy harvesting system (20) according to claim 11 or claim 12.

14. The apparatus according to claim 13, chosen between a vehicle and an item of sports footwear.

15. A method for scavenging energy by means of an energy-scavenging interface (24) having a first input terminal (25') and a second input terminal (25"), connectable to a transducer (22) including a storage element (22b), and a first output terminal (26') and a second output terminal (26"), connectable to an electrical load (27, 28), wherein the first and second input terminals are configured to receive an electrical input signal ($V_{TRANSD}$, $V_{IN}$) having a first polarity and a second polarity of opposite sign with respect to one another, generated by the transducer (22), and the first and second output terminals are configured to supply to the electrical load an output signal ($V_{OUT}$), the method comprising the steps of:

- receiving, by means of a first switch (30) connected between the first input terminal (25') and the second output terminal (26"), a signal function of the electrical input signal ($V_{IN}$, $I_L$) ;
- storing electrical charge in the storage element (22b) during the first time interval;
- driving, when the electrical input signal has the first polarity, the first switch (30) in a closed state for a first time interval having at least one first temporal duration ($T_{DELAY}$) proportional to the time constant ($\tau_{TRANSD}$) of the transducer (22), and until the electrical charge accumulated by the storage element (22b) reaches a threshold value ($I_{TH}$);
- driving the first switch (30) in an open state for a second time interval, having a second temporal duration ($T_{CHARGE}$), subsequent to the first time interval; and

- supplying, by means of a first current-conduction element (36) connected between the first input terminal (25') and the first output terminal (26'), the output signal ($V_{OUT}$) to the electrical load during the first time interval and by means of the charge accumulated in the storage element (22b),

**characterized by** further comprising the steps of:

- acquiring the electrical input signal when the electrical input signal has the first polarity;
- acquiring a reference signal ($V_{REF}$);
- comparing the electrical input signal acquired with the reference signal; and
- generating a control signal ($V_{ctr-th1}$) when the energy accumulated by the storage element (22b) during the first time interval reaches said first threshold value ($I_{TH}$).

16. The energy-scavenging method according to claim 15, further comprising the steps of:

- receiving, by means of a second switch (31) connected between the second input terminal (25") and the second output terminal (26"), the signal function of the electrical input signal ($V_{IN}$, $I_L$) ;
- driving, when the electrical input signal has the first polarity, the second switch (31) in a closed state;
- driving, when the electrical input signal has the second polarity, the first switch (30) in a closed state and the second switch (31) in a closed state for a third time interval having at least the first temporal duration ($T_{DELAY}$) in which the storage element (22b) stores electrical charge and until the electrical charge accumulated by the storage element (22b) reaches the threshold value ($I_{TH}$);
- driving the second switch (31) in an open state for a fourth time interval having the second temporal duration ($T_{CHARGE}$) ; and
- supplying, by means of a second current-conduction element (38), connected between the second input terminal (25") and the first output terminal (26'), the output signal ($V_{OUT}$) to the electrical load (27, 28), during the fourth time interval by means of the electrical charge accumulated in the storage element (22b).

17. The energy-scavenging method according to claim 15 or claim 16, wherein the transducer (22) is an electromagnetic transducer having an equivalent value of inductance ($L_S$) and an equivalent value of resistance ($R_S$), said time constant ($\tau_{TRANSD}$) being given by the ratio between the equivalent value of inductance and the equivalent value of resistance.

18. The energy-scavenging method according to any one of claims 15-17, wherein said first temporal duration ($T_{DELAY}$) has a constant value.

19. The energy-scavenging method according to claim 18, wherein said first temporal duration ($T_{DELAY}$) is equal to approximately 1.5 times the time constant ($\tau_{TRANSD}$) of the transducer (22).

20. The energy-scavenging method according to any one of claims 15-19, further comprising the steps of:

- detecting, during the second time interval, a first value of output current ($I_{OUT}$) that flows between the first input terminal (25') and the first output terminal (26') through the first current-conduction element (36);
- driving, when the electrical input signal has the first polarity, the first switch (30) into the closed state if the first value of output current ($I_{OUT}$) is approximately zero; and
- driving, when the electrical input signal has the first polarity, the first switch (30) into the open state if the first value of output current ($I_{OUT}$) is greater than zero.

21. The energy-scavenging method according to any one of claims 16-20, further comprising the steps of:

- detecting, during the fourth time interval, a second value of output current ($I_{OUT}$) that flows between the second input terminal (25") and the first output terminal (26') through the second current-conduction element (38);
- driving, when the electrical input signal has the second polarity, the first and second switches (30, 31) into the closed state if the second value of output current ($I_{OUT}$) is approximately zero; and
- driving, when the electrical input signal has the second polarity, the second switch (31) into the open state if the second value of output current ($I_{OUT}$) is greater than zero.

22. The energy-scavenging method according to any one of claims 15-21, wherein the first current-conduction element (36) is a controlled switch, the method further comprising the steps of closing the first current-conduction element (36) during the second time interval and opening the first current-conduction element (36) during the first time interval.

**23.** The energy-scavenging method according to any one of claims 16-22, wherein the second current-conduction element (38) is a controlled switch, the method further comprising the steps of closing the second current-conduction element (38) during the fourth time interval and opening the second current-conduction element (38) during the third time interval.

**Patentansprüche**

**1.** Energieaufsammelnde Schnittstelle (24), die einen ersten Eingangsanschluss (25') und einen zweiten Eingangsanschluss (25"), die mit einem Umsetzer (22) verbindbar sind, der ein Speicherelement (22b) beinhaltet, und einen ersten Ausgangsanschluss (26') und einen zweiten Ausgangsanschluss (26"), der mit einer elektrischen Last (27, 28) verbindbar ist, aufweist, wobei der erste und der zweite Eingangsanschluss ausgelegt sind zum Empfangen eines elektrischen Eingangssignals ($V_{TRANSD}$, $V_{IN}$), das eine erste Polarität und eine zweite Polarität mit entgegengesetztem Vorzeichen relativ zueinander aufweist, das von dem Umsetzer (22) erzeugt wird, und der erste und der zweite Ausgangsanschluss ausgelegt sind zum Speisen der elektrischen Last mit einem Ausgangssignal ($V_{OUT}$), wobei die energieaufsammelnde Schnittstelle (24) Folgendes umfasst:

- einen ersten Schalter (30), der zwischen den ersten Eingangsanschluss (25') und den zweiten Ausgangsanschluss (26") geschaltet ist;
- ein erstes Stromleitungselement (36), das zwischen den ersten Eingangsanschluss (25') und den ersten Ausgangsanschluss (26') geschaltet ist; und
- eine Steuerlogik (60), die ausgelegt ist zum:

Ansteuern, wenn das elektrische Eingangssignal die erste Polarität aufweist, des ersten Schalters (30) in einem geschlossenen Zustand für ein erstes Zeitintervall, das mindestens eine erste Zeitdauer ($T_{DELAY}$) aufweist, die proportional zur Zeitkonstanten ($\tau_{TRANSD}$) des Umsetzers (22) ist, während der das Speicherelement (22b) elektrische Energie speichert, und bis die von dem Speicherelement (22b) akkumulierte elektrische Energie einen ersten Schwellenwert ($I_{TH}$) erreicht; und
Ansteuern des ersten Schalters (30) in einem offenen Zustand für ein zweites, eine zweite Zeitdauer ($T_{CHARGE}$) aufweisendes und auf das erste Zeitintervall folgendes Zeitintervall, in dem die elektrische Last (27, 28) durch das erste Stromleitungselement (36) mittels der in dem Speicherelement (22b) akkumulierten elektrischen Ladung gespeist wird,

**dadurch gekennzeichnet, dass** die energieaufsammelnde Schnittstelle ferner eine erste, ein elektrisches Signal detektierende Vorrichtung (55) umfasst, die ausgelegt ist zum:

- Erfassen des elektrischen Eingangssignals, wenn das elektrische Eingangssignal eine erste Polarität aufweist;
- Erfassen eines Referenzsignals ($V_{REF}$) ;
- Vergleichen des erfassten elektrischen Eingangssignals mit dem Referenzsignal; und
- Erzeugen eines Steuersignals ($V_{ctr\_tr1}$), wenn die von dem Speicherelement (22b) während des ersten Zeitintervalls akkumulierte Energie den ersten Schwellenwert ($I_{TH}$) erreicht.

**2.** Energieaufsammelnde Schnittstelle nach Anspruch 1, die Folgendes umfasst:

- einen zweiten Schalter (31), der zwischen den zweiten Eingangsanschluss (25") und den zweiten Ausgangsanschluss (26") geschaltet ist;
- ein zweites Stromleitungselement (38), das zwischen den zweiten Eingangsanschluss (26") und den ersten Ausgangsanschluss (26') geschaltet ist,

wobei die Steuerlogik (60) darüber hinaus ausgelegt ist zum:

- Ansteuern, wenn das elektrische Eingangssignal die erste Polarität aufweist, des zweiten Schalters (31) in einem geschlossenen Zustand;
- Ansteuern, wenn das elektrische Eingangssignal die zweite Polarität aufweist, des ersten Schalters (30) und des zweiten Schalters (31) in einem geschlossenen Zustand für ein drittes Zeitintervall, das mindestens die erste Zeitdauer ($T_{DELAY}$) aufweist, während der das Speicherelement (22b) elektrische Energie speichert, und bis die von dem Speicherelement (22b) akkumulierte elektrische Energie den ersten Schwellenwert ($I_{TH}$) erreicht; und

- Ansteuern des zweiten Schalters (31) in einen offenen Zustand für ein viertes, die zweite Zeitdauer ($T_{CHARGE}$) aufweisendes Zeitintervall, um somit die elektrische Last (27, 28) durch das zweite Stromleitungselement (38) mittels der in dem Speicherelement (22b) akkumulierten elektrischen Ladung zu speisen.

3. Energieaufsammelnde Schnittstelle nach Anspruch 1 oder 2, wobei der Umsetzer (22) ein elektromagnetischer Umsetzer ist, der einen Induktivitäts-Äquivalenzwert ($L_S$) und einen Widerstands-Äquivalenzwert (Rs) aufweist, wobei sich die Zeitkonstante ($\tau_{TRANSD}$) aus dem Verhältnis zwischen dem Induktivitäts-Äquivalenzwert und dem Widerstands-Äquivalenzwert ergibt.

4. Energieaufsammelnde Schnittstelle nach einem der vorhergehenden Ansprüche, wobei die erste Zeitdauer ($T_{DELAY}$) einen konstanten Wert aufweist.

5. Energieaufsammelnde Schnittstelle nach Anspruch 4, wobei die erste Zeitdauer ($T_{DELAY}$) als ungefähr gleich dem 1,5-Fachen der Zeitkonstante ($\tau_{TRANSD}$) des Umsetzers (22) gewählt ist.

6. Energieaufsammelnde Schnittstelle nach einem der Ansprüche 2-5, die ferner eine zweite, ein elektrisches Signal detektierende Vorrichtung (57) umfasst, die ausgelegt ist zum:

   - Erfassen des elektrischen Eingangssignals, wenn das elektrische Eingangssignal die zweite Polarität aufweist;
   - Erfassen des Referenzsignals ($V_{REF}$) ;
   - Vergleichen des erfassten elektrischen Eingangssignals mit dem Referenzsignal; und
   - Erzeugen eines Steuersignals ($V_{ctr\_tr1}$), wenn die von dem Speicherelement (22b) während des ersten Zeitintervalls akkumulierte Energie den ersten Schwellenwert ($I_{TH}$) erreicht.

7. Energieaufsammelnde Schnittstelle nach einem der vorhergehenden Ansprüche, die ferner eine dritte, ein elektrisches Signal detektierende Vorrichtung (56) umfasst, die ausgelegt ist zum Detektieren, während des zweiten Zeitintervalls, eines ersten Werts eines Ausgangsstroms ($I_{OUT}$), der zwischen dem ersten Eingangsanschluss (25') und dem ersten Ausgangsanschluss (26') durch das erste Stromleitungselement (36) fließt, wobei die Steuerlogik (60) darüber hinaus ausgelegt ist zum Ansteuern, wenn das elektrische Eingangssignal die erste Polarität aufweist, des ersten Schalters (30) in den geschlossenen Zustand, wenn der erste Wert des Ausgangsstroms ($I_{OUT}$) ungefähr null ist, und zum Ansteuern, wenn das elektrische Eingangssignal die erste Polarität aufweist, des ersten Schalters (30) in den offenen Zustand, wenn der erste Wert des Ausgangsstroms ($I_{OUT}$) größer als null ist.

8. Energieaufsammelnde Schnittstelle nach einem der Ansprüche 2-7, die ferner eine vierte, ein elektrisches Signal detektierende Vorrichtung (58) umfasst, die ausgelegt ist zum Detektieren, während des vierten Zeitintervalls, eines zweiten Werts des Ausgangsstroms ($I_{OUT}$), der zwischen dem zweiten Eingangsanschluss (25") und dem ersten Ausgangsanschluss (26') durch das zweite Stromleitungselement (38) fließt, wobei die Steuerlogik (60) darüber hinaus ausgelegt ist zum Ansteuern, wenn das elektrische Eingangssignal die zweite Polarität aufweist, des ersten und des zweiten Schalters (30, 31) in den geschlossenen Zustand, wenn der zweite Wert des Ausgangsstroms $I_{OUT}$) ungefähr null ist, und zum Ansteuern, wenn das elektrische Eingangssignal die zweite Polarität aufweist, des zweiten Schalters (31) in den offenen Zustand, wenn der erste Wert des Ausgangsstroms ($I_{OUT}$) größer als null ist.

9. Energieaufsammelnde Schnittstelle nach einem der vorhergehenden Ansprüche, wobei das erste Stromleitungselement (36) ein gesteuerter Schalter ist, wobei die Steuerlogik (60) darüber hinaus ausgelegt ist zum Schließen des ersten Stromleitungselements (36) während des zweiten Zeitintervalls und zum Öffnen des ersten Stromleitungselements (36) während des ersten Zeitintervalls.

10. Energieaufsammelnde Schnittstelle nach einem der Ansprüche 2-9, wobei das zweite Stromleitungselement (38) ein gesteuerter Schalter ist, wobei die Steuerlogik (60) darüber hinaus ausgelegt ist zum Schließen des zweiten Stromleitungselements (38) während des vierten Zeitintervalls und zum Öffnen des zweiten Stromleitungselements (38) während des dritten Zeitintervalls.

11. Energiegewinnungssystem (20), das ausgelegt ist zum Speisen einer elektrischen Last (28), das Folgendes umfasst:

   - einen Umsetzer (22), der ausgelegt ist zum Umwandeln von Energie, die von einer außerhalb des Systems (20) befindlichen Energiequelle kommt, in ein elektrisches Wechselstrom(AC)-Signal ($V_{TPANSD}$, $V_{IN}$) ;

- eine elektrische Energie aufsammelnde Schnittstelle (24) nach einem der Ansprüche 1-10, die ausgelegt ist zum Empfangen des elektrischen AC-Signals am Eingang und zum Speisen eines Gleichstrom(DC)-Ausgangssignals ($V_{OUT}$) am Ausgang;

- ein erstes Speicherelement (27), das zum Empfangen des DC-Ausgangssignals ($V_{OUT}$) am Eingang mit der elektrische Energie aufsammelnden Schnittstelle (24) gekoppelt ist und das ausgelegt ist zum akkumulieren elektrischer Energie, die zum Speisen der elektrischen Last (28) geeignet ist.

12. System nach Anspruch 11, das ferner einen DC-DC-Wandler (6) umfasst, der zwischen das erste Speicherelement (27) und die elektrische Last (28) geschaltet ist, wobei der DC-DC-Wandler (6) ausgelegt ist zum Speisen der elektrischen Last (28) über die in dem ersten Speicherelement (27) akkumulierte elektrische Energie.

13. Einrichtung (100), die das Energiegewinnungssystem (20) nach Anspruch 11 oder Anspruch 12 umfasst.

14. Einrichtung nach Anspruch 13, die unter einem Fahrzeug und einem Sportschuhbekleidungsartikel ausgewählt ist.

15. Verfahren zum Aufsammeln von Energie mittels einer energieaufsammelnden Schnittstelle (24), die einen ersten Eingangsanschluss (25') und einen zweiten Eingangsanschluss (25"), die mit einem Umsetzer (22) verbindbar sind, der ein Speicherelement (22b) beinhaltet, und einen ersten Ausgangsanschluss (26') und einen zweiten Ausgangsanschluss (26"), der mit einer elektrischen Last (27, 28) verbindbar ist, aufweist, wobei der erste und der zweite Eingangsanschluss ausgelegt sind zum Empfangen eines elektrischen Eingangssignals ($V_{TRANSD}$, $V_{IN}$), das eine erste Polarität und eine zweite Polarität mit entgegengesetztem Vorzeichen relativ zueinander aufweist, das von dem Umsetzer (22) erzeugt wird, und der erste und der zweite Ausgangsanschluss ausgelegt sind zum Speisen der elektrischen Last mit einem Ausgangssignal ($V_{OUT}$), wobei das Verfahren die folgenden Schritte umfasst:

- Empfangen, mittels eines ersten Schalters (30), der zwischen den ersten Eingangsanschluss (25') und den zweiten Ausgangsanschluss (26") geschaltet ist, eines Signals als Funktion des elektrischen Eingangssignals ($V_{IN}$, $I_L$) ;

- Speichern elektrischer Ladung im Speicherelement (22b) während des ersten Zeitintervalls;

- Ansteuern, wenn das elektrische Eingangssignal die erste Polarität aufweist, des ersten Schalters (30) in einem geschlossenen Zustand für ein erstes Zeitintervall, das mindestens eine erste Zeitdauer ($T_{DELAY}$) aufweist, die proportional zur Zeitkonstanten ($\tau_{TRANSD}$) des Umsetzers (22) ist, und bis die von dem Speicherelement (22b) akkumulierte elektrische Ladung einen ersten Schwellenwert ($I_{TH}$) erreicht;

- Ansteuern des ersten Schalters (30) in einem offenen Zustand für ein zweites, eine zweite Zeitdauer ($T_{CHARGE}$) aufweisendes und auf das erste Zeitintervall folgendes Zeitintervall; und

- Speisen mittels eines ersten Stromleitungselements (36), das zwischen den ersten Eingangsanschluss (25') und den ersten Ausgangsanschluss (26') geschaltet ist, des Ausgangssignals ($V_{OUT}$) zur elektrischen Last während des ersten Zeitintervalls und mittels der in dem Speicherelement (22b) akkumulierten Ladung,

**dadurch gekennzeichnet, dass** es ferner die folgenden Schritte umfasst:

- Erfassen des elektrischen Eingangssignals, wenn das elektrische Eingangssignal die erste Polarität aufweist;
- Erfassen eines Referenzsignals ($V_{REF}$) ;
- Vergleichen des erfassten elektrischen Eingangssignals mit dem Referenzsignal; und
- Erzeugen eines Steuersignals ($V_{ctr-th1}$), wenn die von dem Speicherelement (22b) während des ersten Zeitintervalls akkumulierte Energie den ersten Schwellenwert ($I_{TH}$) erreicht.

16. Energieaufsammelverfahren nach Anspruch 15, das ferner die folgenden Schritte umfasst:

- Empfangen, mittels eines zweiten Schalters (31), der zwischen den zweiten Eingangsanschluss (25") und den zweiten Ausgangsanschluss (26") geschaltet ist, des Signals als Funktion des elektrischen Eingangssignals ($V_{IN}$, $I_L$) ;

- Ansteuern, wenn das elektrische Eingangssignal die erste Polarität aufweist, des zweiten Schalters (31) in einem geschlossenen Zustand;

- Ansteuern, wenn das elektrische Eingangssignal die zweite Polarität aufweist, des ersten Schalters (30) in einem geschlossenen Zustand und des zweiten Schalters (31) in einem geschlossenen Zustand für ein drittes Zeitintervall, das mindestens die erste Zeitdauer ($T_{DELAY}$) aufweist, in der das Speicherelement (22b) elektrische Ladung speichert, und bis die von dem Speicherelement (22b) akkumulierte elektrische Ladung den Schwellenwert ($I_{TH}$) erreicht;

- Ansteuern des zweiten Schalters (31) in einem offenen Zustand für ein viertes, die zweite Zeitdauer ($T_{CHARGE}$) aufweisendes Zeitintervall; und

- Speisen mittels eines zweiten Stromleitungselements (38), das zwischen den zweiten Eingangsanschluss (26") und den ersten Ausgangsanschluss (26') geschaltet ist, des Ausgangssignals ($V_{OUT}$) zur elektrischen Last (27, 28) während des vierten Zeitintervalls mittels der in dem Speicherelement (22b) akkumulierten elektrischen Ladung.

17. Energieaufsammelverfahren nach Anspruch 15 oder Anspruch 16, wobei der Umsetzer (22) ein elektromagnetischer Umsetzer ist, der einen Induktivitäts-Äquivalenzwert ($L_S$) und einen Widerstands-Äquivalenzwert (Rs) aufweist, wobei sich die Zeitkonstante ($\tau_{TRANSD}$) aus dem Verhältnis zwischen dem Induktivitäts-Äquivalenzwert und dem Widerstands-Äquivalenzwert ergibt.

18. Energieaufsammelverfahren nach einem der Ansprüche 15-17, wobei die erste Zeitdauer ($T_{DELAY}$) einen konstanten Wert aufweist.

19. Energieaufsammelverfahren nach Anspruch 18, wobei die erste Zeitdauer ($T_{DELAY}$) gleich ungefähr dem 1,5-Fachen der Zeitkonstante ($\tau_{TRANSD}$) des Umsetzers (22) ist.

20. Energieaufsammelverfahren nach einem der Ansprüche 15-19, das ferner die folgenden Schritte umfasst:

- Detektieren, während des zweiten Zeitintervalls, eines ersten Werts eines Ausgangsstroms ($I_{OUT}$), der zwischen dem ersten Eingangsanschluss (25') und dem ersten Ausgangsanschluss (26') durch das erste Stromleitungselement (36) fließt;
- Ansteuern, wenn das elektrische Eingangssignal die erste Polarität aufweist, des ersten Schalters (30) in den geschlossenen Zustand, wenn der erste Wert des Ausgangsstroms ($I_{OUT}$) ungefähr null ist; und
- Ansteuern, wenn das elektrische Eingangssignal die erste Polarität aufweist, des ersten Schalters (30) in den offenen Zustand, wenn der erste Wert des Ausgangsstroms ($I_{OUT}$) größer als null ist.

21. Energieaufsammelverfahren nach einem der Ansprüche 16-20, das ferner die folgenden Schritte umfasst:

- Detektieren, während des vierten Zeitintervalls, eines zweiten Werts des Ausgangsstroms ($I_{OUT}$), der zwischen dem zweiten Eingangsanschluss (25") und dem ersten Ausgangsanschluss (26') durch das zweite Stromleitungselement (38) fließt;
- Ansteuern, wenn das elektrische Eingangssignal die zweite Polarität aufweist, des ersten und des zweiten Schalters (30, 31) in den geschlossenen Zustand, wenn der zweite Wert des Ausgangsstroms ($I_{OUT}$) ungefähr null ist; und
- Ansteuern, wenn das elektrische Eingangssignal die zweite Polarität aufweist, des zweiten Schalters (31) in den offenen Zustand, wenn der zweite Wert des Ausgangsstroms ($I_{OUT}$) größer als null ist.

22. Energieaufsammelverfahren nach einem der Ansprüche 15-21, wobei das erste Stromleitungselement (36) ein gesteuerter Schalter ist, wobei das Verfahren ferner die Schritte des Schließens des ersten Stromleitungselements (36) während des zweiten Zeitintervalls und des Öffnens des ersten Stromleitungselements (36) während des ersten Zeitintervalls umfasst.

23. Energieaufsammelverfahren nach einem der Ansprüche 16-22, wobei das zweite Stromleitungselement (38) ein gesteuerter Schalter ist, wobei das Verfahren ferner die Schritte des Schließens des zweiten Stromleitungselements (38) während des vierten Zeitintervalls und des Öffnens des zweiten Stromleitungselements (38) während des dritten Zeitintervalls umfasst.

**Revendications**

1. Interface de collecte d'énergie (24) comportant une première borne d'entrée (25') et une seconde borne d'entrée (25") pouvant être connectées à un transducteur (22) qui comporte un élément de stockage (22b), et une première borne de sortie (26') et une seconde borne de sortie (26") qui peut être connectée à une charge électrique (27, 28), dans laquelle les première et seconde bornes d'entrée sont configurées pour recevoir un signal d'entrée électrique ($V_{TRANSD}$, $V_{IN}$) ayant une première polarité et une seconde polarité de signe opposé l'une par rapport à l'autre, généré par le transducteur (22), et les première et seconde bornes de sortie sont configurées pour fournir à la charge électrique un signal de sortie ($V_{OUT}$), l'interface de collecte d'énergie (24) comprenant :

- un premier commutateur (30) connecté entre la première borne d'entrée (25') et la seconde borne de sortie (26") ;
- un premier élément de conduction de courant (36), connecté entre la première borne d'entrée (25') et la première borne de sortie (26') ; et
- une logique de commande (60) configurée pour :

commander, quand le signal d'entrée électrique a la première polarité, le premier commutateur (30) dans un état fermé pendant un premier intervalle de temps ayant au moins une première durée temporelle ($T_{DELAY}$) proportionnelle à la constante de temps ($\tau_{TRANSD}$) du transducteur (22), pendant lequel l'élément de stockage (22b) stocke l'énergie électrique, et jusqu'à ce que l'énergie électrique accumulée par l'élément de stockage (22b) atteigne une première valeur limite ($I_{TH}$) ; et

commander le premier commutateur (30) dans un état ouvert pendant un deuxième intervalle de temps ayant une seconde durée temporelle ($T_{CHARGE}$) et consécutif au premier intervalle de temps, durant lequel la charge électrique (27, 28) est alimentée par le biais du premier élément de conduction de courant (36) au moyen de la charge électrique accumulée dans l'élément de stockage (22b),

**caractérisée en ce que** l'interface de collecte d'énergie comprend en outre un premier dispositif de détection de signal électrique (55) configuré pour :

- acquérir le signal d'entrée électrique quand le signal d'entrée électrique a la première polarité ;
- acquérir un signal de référence ($V_{REF}$) ;
- comparer le signal d'entrée électrique acquis au signal de référence ; et
- générer un signal de commande ($V_{ctr-th1}$) quand l'énergie accumulée par l'élément de stockage (22b) durant le premier intervalle de temps atteint ladite première valeur limite ($I_{TH}$).

**2.** Interface de collecte d'énergie selon la revendication 1, comprenant :

- un second commutateur (31) connecté entre la seconde borne d'entrée (25") et la seconde borne de sortie (26") ;
- un second élément de conduction de courant (38), connecté entre la seconde borne d'entrée (25") et la première borne de sortie (26') ;

dans lequel la logique de commande (60) est configurée en outre pour :

- commander, quand le signal d'entrée électrique a la première polarité, le second commutateur (31) dans un état fermé ;
- commander, quand le signal d'entrée électrique a la seconde polarité, le premier commutateur (30) et le second commutateur (31) dans un état fermé pendant un troisième intervalle de temps ayant au moins la première durée temporelle ($T_{DELAY}$), durant lequel l'élément de stockage (22b) stocke l'énergie électrique, et jusqu'à ce que l'énergie électrique accumulée par l'élément de stockage (22b) atteigne la première valeur limite ($I_{TH}$) ; et
- commander le second commutateur (31) dans un état ouvert pendant un quatrième intervalle de temps ayant la seconde durée temporelle ($T_{CHARGE}$), de manière à alimenter la charge électrique (27, 28) par le biais du second élément de conduction de courant (38) au moyen de la charge électrique accumulée dans l'élément de stockage (22b).

**3.** Interface de collecte d'énergie selon la revendication 1 ou 2, dans laquelle le transducteur (22) est un transducteur électromagnétique ayant une valeur d'inductance équivalente ($L_S$) et une valeur de résistance équivalente ($R_S$), ladite constante de temps ($\tau_{TRANSD}$) étant donnée par le rapport entre la valeur d'inductance équivalente et la valeur de résistance équivalente.

**4.** Interface de collecte d'énergie selon l'une quelconque des revendications précédentes, dans laquelle ladite première durée temporelle ($T_{DELAY}$) a une valeur constante.

**5.** Interface de collecte d'énergie selon la revendication 4, dans laquelle ladite première durée temporelle ($T_{DELAY}$) est choisie égale à, approximativement, 1,5 fois la constante de temps ($\tau_{TRANSD}$) du transducteur (22).

**EP 2 530 821 B1**

6. Interface de collecte d'énergie selon l'une quelconque des revendications 2 à 5, comprenant en outre un deuxième dispositif de détection de signal électrique (57) configuré pour :

- acquérir le signal d'entrée électrique quand le signal d'entrée électrique a la seconde polarité ;
- acquérir le signal de référence ($V_{REF}$) ;
- comparer le signal d'entrée électrique acquis au signal de référence ; et
- générer un signal de commande ($V_{ctr-th1}$) quand l'énergie accumulée par l'élément de stockage (22b) durant le premier intervalle de temps atteint ladite première valeur limite ($I_{TH}$).

7. Interface de collecte d'énergie selon l'une quelconque des revendications précédentes, comprenant en outre un troisième dispositif de détection de signal électrique (56) configuré pour détecter, durant le deuxième intervalle de temps, une première valeur de courant de sortie ($I_{OUT}$) qui s'écoule entre la première borne d'entrée (25') et la première borne de sortie (26') à travers le premier élément de conduction du courant (36), la logique de commande (60) étant configurée en outre pour commander, quand le signal d'entrée électrique a la première polarité, le premier commutateur (30) dans l'état fermé si la première valeur de courant de sortie ($I_{OUT}$) est approximativement zéro et pour commander, quand le signal d'entrée électrique a la première polarité, le premier commutateur (30) dans l'état ouvert si la valeur de courant de sortie ($I_{OUT}$) est supérieure à zéro.

8. Interface de collecte d'énergie selon l'une quelconque des revendications 2 à 7, comprenant en outre un quatrième dispositif de détection de signal électrique (58) configuré pour détecter, durant le quatrième intervalle de temps, une seconde valeur de courant de sortie ($I_{OUT}$) qui s'écoule entre la seconde borne d'entrée (25") et la première borne de sortie (26') à travers le second élément de conduction du courant (38), la logique de commande (60) étant configurée en outre pour commander, quand le signal d'entrée électrique a la seconde polarité, les premier et deuxième commutateurs (30, 31) dans l'état fermé si la seconde valeur de courant de sortie ($I_{OUT}$) est approximativement zéro et pour commander, quand le signal d'entrée électrique a la seconde polarité, le deuxième commutateur (31) dans l'état ouvert si la première valeur de courant de sortie $I_{OUT}$) est supérieure à zéro.

9. Interface de collecte d'énergie selon l'une quelconque des revendications précédentes, dans laquelle le premier élément de conduction du courant (36) est un commutateur commandé, la logique de commande (60) étant configurée en outre pour fermer le premier élément de conduction de courant (36) durant le deuxième intervalle de temps et ouvrir le premier élément de conduction de courant (36) durant le premier intervalle de temps.

10. Interface de collecte d'énergie selon l'une quelconque des revendications 2 à 9, dans laquelle le second élément de conduction du courant (38) est un commutateur commandé, la logique de commande (60) étant configurée en outre pour fermer le second élément de conduction de courant (38) durant le quatrième intervalle de temps et ouvrir le second élément de conduction de courant (38) durant le troisième intervalle de temps.

11. Système de collecte d'énergie (20) configuré pour alimenter une charge électrique (28), comprenant :

- un transducteur (22), configuré pour convertir l'énergie provenant d'une source d'énergie externe audit système (20) en un signal électrique C.A. ($V_{TRANSD}$, $V_{IN}$);
- une interface de collecte d'énergie électrique (24) selon l'une quelconque des revendications 1 à 10, configurée pour recevoir en entrée le signal électrique C.A. et fournir en sortie un signal de sortie C.C. ($V_{OUT}$) ;
- un premier élément de stockage (27) couplé à l'interface de collecte d'énergie électrique (24) pour recevoir en entrée le signal de sortie C.C. ($V_{OUT}$), et configuré pour accumuler l'énergie électrique adaptée pour alimenter la charge électrique (28).

12. Système selon la revendication 11, comprenant en outre un convertisseur C.C. - C.C. (6) connecté entre le premier élément de stockage (27) et la charge électrique (28), ledit convertisseur C.C.-C.C. (6) étant configuré pour alimenter la charge électrique (28) par l'intermédiaire de l'énergie électrique accumulée dans le premier élément de stockage (27).

13. Appareil (100) comprenant le système de collecte d'énergie (20) selon la revendication 11 ou la revendication 12.

14. Appareil selon la revendication 13, choisi entre un véhicule et un article de chaussures de sport.

15. Procédé de collecte d'énergie au moyen d'une interface de collecte d'énergie (24) comportant une première borne d'entrée (25') et une seconde borne d'entrée (25") pouvant être connectées à un transducteur (22) qui comporte un élément de stockage (22b), et une première borne de sortie (26') et une seconde borne de sortie (26"), qui peut être connectée à une charge électrique (27, 28), dans laquelle les première et seconde bornes d'entrée sont configurées pour recevoir un signal d'entrée électrique ($V_{TRANSD}$, $V_{IN}$) ayant une première polarité et une seconde polarité de signe opposé l'une par rapport à l'autre, généré par le transducteur (22), et les première et seconde bornes de sortie sont configurées pour fournir à la charge électrique un signal de sortie ($V_{OUT}$), le procédé comprenant les étapes consistant à :

- recevoir, au moyen d'un premier commutateur (30) connecté entre la première borne d'entrée (25') et la seconde borne de sortie (26"), un signal fonction du signal d'entrée électrique ($V_{IN}$, $I_L$);
- stocker la charge électrique dans l'élément de stockage (22b) durant le premier intervalle de temps ;
- commander, quand le signal d'entrée électrique a la première polarité, le premier commutateur (30) dans un état fermé pendant un premier intervalle de temps ayant au moins une première durée temporelle ($T_{DELAY}$) proportionnelle à la constante de temps ($\tau_{TRANSD}$) du transducteur (22), et jusqu'à ce que l'énergie électrique accumulée par l'élément de stockage (22b) atteigne une première valeur limite ($I_{TH}$) ;
- commander le premier commutateur (30) dans un état ouvert pendant un deuxième intervalle de temps, ayant une seconde durée temporelle ($T_{CHARGE}$), consécutif au premier intervalle de temps ; et
- fournir, au moyen d'un premier élément de conduction de courant (36) connecté entre la première borne d'entrée (25') et la première borne de sortie (26'), le signal de sortie ($V_{OUT}$) à la charge électrique durant le premier intervalle de temps et au moyen de la charge accumulée dans l'élément de stockage (22b),

**caractérisé en ce qu'**il comprend en outre les étapes consistant à :

- acquérir le signal d'entrée électrique quand le signal d'entrée électrique a la première polarité ;
- acquérir un signal de référence ($V_{REF}$) ;
- comparer le signal d'entrée électrique acquis au signal de référence ; et
- générer un signal de commande ($V_{ctr-th1}$) quand l'énergie accumulée par l'élément de stockage (22b) durant le premier intervalle de temps atteint ladite première valeur limite ($I_{TH}$).

16. Procédé de collecte d'énergie selon la revendication 15, comprenant en outre les étapes consistant à :

- recevoir, au moyen d'un second commutateur (31) connecté entre la seconde borne d'entrée (25") et la seconde borne de sortie (26"), le signal fonction du signal d'entrée électrique ($V_{IN}$, $I_L$) ;
- commander, quand le signal d'entrée électrique a la première polarité, le second commutateur (31) dans un état fermé ;
- commander, quand le signal d'entrée électrique a la seconde polarité, le premier commutateur (30) dans un état fermé et le second commutateur (31) dans un état fermé pendant un troisième intervalle de temps ayant au moins la première durée temporelle ($T_{DELAY}$), pendant lequel l'élément de stockage (22b) stocke l'énergie électrique et jusqu'à ce que l'énergie électrique accumulée par l'élément de stockage (22b) atteigne la valeur limite ($I_{TH}$) ;
- commander le second commutateur (31) dans un état ouvert pendant un quatrième intervalle de temps ayant la seconde durée temporelle ($T_{CHARGE}$) ; et
- fournir, au moyen d'un second élément de conduction de courant (38), connecté entre la seconde borne d'entrée (25") et la première borne de sortie (26'), le signal de sortie ($V_{OUT}$) à la charge électrique (27, 28) durant le quatrième intervalle de temps au moyen de la charge accumulée dans l'élément de stockage (22b).

17. Procédé de collecte d'énergie selon la revendication 15 ou la revendication 16, dans lequel le transducteur (22) est un transducteur électromagnétique ayant une valeur d'inductance équivalente ($L_S$) et une valeur de résistance équivalente ($R_S$), ladite constante de temps ($\tau_{TRANSD}$) étant donnée par le rapport entre la valeur d'inductance équivalente et la valeur de résistance équivalente.

18. Procédé de collecte d'énergie selon l'une quelconque des revendications 15 à 17, dans lequel ladite première durée temporelle ($T_{DELAY}$) a une valeur constante.

19. Procédé de collecte d'énergie selon la revendication 18, dans lequel ladite première durée temporelle ($T_{DELAY}$) est égale à approximativement 1,5 fois la constante de temps ($\tau_{TRANSD}$) du transducteur (22).

20. Procédé de collecte d'énergie selon l'une quelconque des revendications 15 à 19, comprenant en outre les étapes consistant à :

- détecter, durant le deuxième intervalle de temps, une première valeur de courant de sortie ($I_{OUT}$) qui s'écoule entre la première borne d'entrée (25') et la première borne de sortie (26') à travers le premier élément de conduction du courant (36) ;

- commander, quand le signal d'entrée électrique a la première polarité, le premier commutateur (30) dans l'état fermé si la première valeur de courant de sortie ($I_{OUT}$) est approximativement zéro ; et

- commander, quand le signal d'entrée électrique a la première polarité, le premier commutateur (30) dans l'état ouvert si la valeur de courant de sortie ($I_{OUT}$) est supérieure à zéro.

21. Procédé de collecte d'énergie selon l'une quelconque des revendications 16 à 20, comprenant en outre les étapes consistant à :

- détecter, durant le quatrième intervalle de temps, une seconde valeur de courant de sortie ($I_{OUT}$) qui s'écoule entre la seconde borne d'entrée (25") et la première borne de sortie (26') à travers le second élément de conduction du courant (38) ;

- commander, quand le signal d'entrée électrique a la seconde polarité, les premier et deuxième commutateurs (30, 31) dans l'état fermé si la seconde valeur de courant de sortie ($I_{OUT}$) est approximativement zéro ; et

- commander, quand le signal d'entrée électrique a la seconde polarité, le second commutateur (31) dans l'état ouvert si la seconde valeur de courant de sortie ($I_{OUT}$) est supérieure à zéro.

22. Procédé de collecte d'énergie selon l'une quelconque des revendications 15 à 21, dans lequel le premier élément de conduction du courant (36) est un commutateur commandé, le procédé comprenant en outre les étapes consistant à fermer le premier élément de conduction de courant (36) durant le deuxième intervalle de temps et à ouvrir le premier élément de conduction de courant (36) durant le premier intervalle de temps.

23. Procédé de collecte d'énergie selon l'une quelconque des revendications 16 à 22, dans lequel le second élément de conduction du courant (38) est un commutateur commandé, le procédé comprenant en outre les étapes consistant à fermer le second élément de conduction de courant (38) durant le quatrième intervalle de temps et à ouvrir le second élément de conduction de courant (38) durant le troisième intervalle de temps.

Fig.1

Fig.2

Fig.3

Fig.4a

Fig.4b

Fig.5a

Fig.5b

Fig.5c

EP 2 530 821 B1

Fig.6a

Fig.6b

Fig.7

START

70

CLOSE SWITCHES 30 AND 31

72

NO — $I_L \geq I_{TH}$ AND $T \geq T_{DELAY}$

YES

74

YES — $V_{IN} < 0$ — NO

76

OPEN SWITCH 31 AND SUPPLY LOAD VIA DIODE 41

78

OPEN SWITCH 30 AND SUPPLY LOAD VIA DIODE 40

80

YES — $I_{OUT} > 0$

NO

END

Fig.8

Fig.9

Fig.10

Fig.11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050110277 A

**Non-patent literature cited in the description**

- Energy scavenging with shoe-mounted piezoe-lectrics. **SHENCK N. S. et al.** IEEE MICRO. IEEE Service Center, 01 May 2001, vol. 21, 30-42
- Monolithic DC-DC Boost Converter with Current-Mode Hysteretic Control. **AYAZ HASAN et al.** ELECTRICAL AND COMPUTER ENGINEERING (CCECE), 2011, 24th Canadian Conference. IEEE, 08 May 2011, 1242-1245

- **JOHN C. SALMON.** Circuit Topologies For Single-Phase Voltage-Doubler Boost Rectifier. *Proceedings of the annual applied power electronics conference and exhibition (APEC),* 1992, 23-27
- Proceedings of the annual applied power electronics conference and exhibition (APEC). IEEE, 23 February 1992, vol. 7, 549-556